# EUROPEAN PATENT SPECIFICATION

(11) **EP 4 369 286 B1**
(45) Date of publication and mention of the grant of the patent: **14.10.2026**
(21) Application number: 22836831.2
(22) Date of filing: 01.07.2022
(51) Int. Cl.: G06T 5/00, G06T 7/13, G06T 5/94, G06T 5/50, G06T 7/136

(54) **APPARATUS AND METHOD FOR ELIMINATING SHADOW, AND APPARATUS AND METHOD FOR IDENTIFYING EMPTY TRAY**
GERÄT UND VERFAHREN ZUR ENTFERNUNG VON SCHATTEN, SOWIE GERÄT UND VERFAHREN ZUR IDENTIFIZIERUNG EINES LEEREN ABGABEFACHES
APPAREIL ET MÉTHODE D'ÉLIMINATION DE L'OMBRE, ET APPAREIL ET MÉTHODE D'IDENTIFICATION D'UN BAC DE DÉPÔT VIDE

(30) Priority: 07.07.2021 CN 202110774907
(43) Date of publication of application: 15.05.2024
(73) Proprietor: Nuctech Company Limited, TongFang Building Shuangqinglu Haidian District Beijing 100084 (CN); Nuctech Jiangsu Company Limited, Changzhou, Jiangsu 213200 (CN); Tsinghua University, Haidian District, Beijing 100084 (CN)
(72) Inventor: CHEN, Zhiqiang, Beijing 100084 (CN); ZHANG, Li, Beijing 100084 (CN); TANG, Hu, Beijing 100084 (CN); SUN, Yunda, Beijing 100084 (CN); LI, Dong, Beijing 100084 (CN); YAN, Dan, Beijing 100084 (CN)
(74) Representative: Cabinet Beau de Loménie
(86) International application number: PCT/CN2022/103447
(87) International publication number: WO 2023/280080

(56) References cited:
- WO-A1-2021/128966
- CN-A- 107 146 210
- CN-A- 107 451 546
- CN-A- 113 033 545
- JP-A- 2017 123 069
- JP-A- 2018 098 583
- US-A1- 2020 126 202
- CHENG LU ET AL: "Shadow Removal via Flash/Noflash Illumination", 2006 IEEE WORKSHOP ON MULTIMEDIA SIGNAL PROCESSING : VICTORIA, BC, CANADA, 3 - 6 OCTOBER 2006, IEEE SERVICE CENTER, PISCATAWAY, NJ, 31 October 2006 (2006-10-31), pages 198 - 201, XP031011048, ISBN: 978-0-7803-9751-4
- KRISHNAN DILIP ET AL: "Dark flash photography", ACM TRANSACTIONS ON GRAPHICS, ACM, NY, US, vol. 28, no. 3, 27 July 2009 (2009-07-27), pages 1 - 11, XP059142055, ISSN: 0730-0301, DOI: 10.1145/1531326.1531402

## Description

### TECHNICAL FIELD

The present disclosure relates to a field of luggage security inspection, and in particular, to an apparatus and a method for eliminating a shadow, and an apparatus and a method for identifying an empty tray.

### BACKGROUND

In the traditional luggage security inspection field, security inspectors need to guide passengers to put luggage into trays and put the trays on a conveyor belt so that the trays may enter an imaging device through the conveyor belt. The imaging device images the luggage and the tray, and determines whether the luggage contains prohibited items through image identification. After passengers take away their luggage, security inspectors need to manually recover the empty tray for reuse. Therefore, there are problems such as heavier workload for security inspectors, low efficiency of passengers passing through security inspections, and long queuing times. In addition, if empty trays are also subject to security inspection, the security inspection time will also be lengthened.

Therefore, if an automatic identification of empty trays can be implemented, it will be beneficial to an automatic recovery of empty trays, or a rapid elimination of empty trays, which may greatly reduce the workload of security inspectors, speed up security inspections, and improve the security inspection experience of passengers.

CHENG LU ET AL: "Shadow Removal via Flash/Noflash Illumination", 2006 IEEE WORKSHOP ON MULTIMEDIA SIGNAL PROCESSING: VICTORIA, BC, CANADA, 3 - 6 OCTOBER 2006, IEEE SERVICE CENTER, PISCATAWAY, NJ, 1 October 2006, pages 198-201, XP031011048 discloses a method of removing the effect of shadow-edges from an edge map of each frame by attenuating the shadow by utilizing a second image under another illuminant, including: examining flash/noflash still image pairs; producing a flash-only (no ambient) image by subtracting the two images; using the pure-flash image to detect the ambient shadows; and manipulating the gradient field using a smoothing step including the directionality of edges near the shadow boundary.

WO 2021/128966 A1 discloses an empty tray identification method. The method comprises: receiving, from an image collection module, an image of a tray to be identified; for the image, determining whether there is an effective reference empty tray image for the image in an identification module; in response to there being an effective reference empty tray image for the image, determining whether a tray corresponding to the image is an empty tray on the basis of the image and/or the effective reference empty tray image for the image and by using a first method; and in response to there being no effective reference empty tray image for the image, determining whether a tray corresponding to the image is an empty tray only on the basis of the image and by using a second method, which is different from the first method, and when it is determined that the tray is an empty tray, determining the image corresponding to the empty tray to be a new effective reference empty tray image.

KRISHNAN DILIP ET AL: "Dark flash photography", ACM TRANSACTIONS ON GRAPHICS, ACM, NY, US, vol. 28, no. 3, 27 July 2009, pages 1-11, XP059142055 discloses a prototype camera and flash that uses infra-red and ultra-violet light mostly outside the visible range to capture pictures in low-light conditions.

### SUMMARY

After investigation and research, the inventor of the present disclosure found that there are currently two main technologies that may implement automatic identification for empty tray. One is based on laser ranging technology, which uses laser ranging to determine whether the tray is empty. In this case, it relies on a dense laser ranging array, which is very costly and has poor practicality. Another one is a technology based on image identification to determine whether the tray is empty. In this case, it is easy to mistakenly identify interference medium such as advertisements, stickers, pictures, etc. placed in the tray and shadows caused by illumination as well as luggage, resulting in a low recognition accuracy. Sometimes manual intervention is required to achieve effective identification, resulting in low automation and low identification efficiency.

The invention is defined by the appended claims.

The present disclosure provides a shadow-adaptive apparatus and a shadow-adaptive method for identifying an empty tray, which are capable of identifying the illumination shadow area on a tray, thereby improving the accuracy of empty tray identification.

In a first aspect, one embodiment of the present disclosure provides an apparatus for eliminating a shadow, including: an image acquiring module configured to acquire an image with supplementary lighting and an image without supplementary lighting; an illumination area image acquiring module configured to obtain an illumination area image based on a difference between the image with supplementary lighting and the image without supplementary lighting; an edge detecting module configured to perform an edge detection on the image without supplementary lighting to obtain an edge image; and a shadow line eliminating module configured to eliminate a part corresponding to the illumination area image from the edge image to obtain an actual edge image.

According to one aspect of the embodiment of the present disclosure, the image with supplementary lighting is captured by using an infrared light emitting apparatus to provide a supplementary lighting.

According to one aspect of the embodiment of the present disclosure, the illumination area image acquiring module is configured to determine that a pixel point belongs to the illumination area image when a ratio of a pixel value of the image with supplementary lighting to a pixel value of the image without supplementary lighting is within a predetermined threshold range.

According to one aspect of the embodiment of the present disclosure, the edge detecting module is configured to perform an edge detection after performing a Gaussian Blur processing on the image without supplementary lighting.

According to one aspect of the embodiment of the present disclosure, the shadow line eliminating module is configured to eliminate a pixel point of the edge image when determining that an area proportion of an illumination area in a neighborhood of the pixel point is within a predetermined area threshold range.

According to one aspect of the embodiment of the present disclosure, the shadow line eliminating module includes: a neighborhood determining portion configured to determine a neighborhood for each pixel point in the edge image; a corresponding area determining portion configured to determine an area corresponding to the neighborhood from the illumination area image; an illumination area proportion determining portion configured to determine whether the area proportion of the illumination area in the area is within the predetermined area threshold range; an edge point eliminating portion configured to eliminate one or more pixel points whose area proportions are within the predetermined area threshold range; and an actual edge image output portion configured to generate and output the actual edge image based on one or more first remaining edge points.

In a second aspect, another embodiment of the present disclosure provides an apparatus for identifying an empty tray, including: the apparatus for eliminating a shadow; and an empty tray determining module configured to determine whether a tray is empty based on the actual edge image, where the image with supplementary lighting and the image without supplementary lighting are obtained by photographing an empty tray.

According to one aspect of the embodiment of the present disclosure, the apparatus for identifying an empty tray further includes: a template matching module configured to match the actual edge image with an interference medium image template; and a corresponding area eliminating module configured to eliminate one or more edge points corresponding to the interference medium image template from the actual edge image to obtain one or more second remaining edge points, where the empty tray determining module is configured to determine whether the tray is empty by using the one or more second remaining edge points instead of the actual edge image.

In a third aspect, another embodiment of the present disclosure provides a system for identifying an empty tray, including: a light emitting apparatus; an image collecting apparatus configured to photograph an empty tray when the light emitting apparatus is turned off to obtain an image without supplementary lighting, and photograph an empty tray when the light emitting device is turned on to obtain an image with supplementary lighting; and the apparatus for identifying an empty tray.

One embodiment of the present disclosure provides a system for identifying an empty tray, including: a light emitting apparatus; an image collecting apparatus configured to photograph an empty tray when the light emitting apparatus is turned off to obtain an image without supplementary lighting, and photograph an empty tray when the light emitting device is turned on to obtain an image with supplementary lighting; the apparatus for identifying an empty tray; and an interference medium image template generating apparatus configured to generate an interference medium image template containing edge points of an interference medium by performing an edge detection on a plurality of bottom pallet images.

In a fourth aspect, another embodiment of the present disclosure provides a method for eliminating a shadow, including: an image acquiring step for acquiring an image with supplementary lighting and an image without supplementary lighting; an illumination difference step for obtaining an illumination area image based on a difference between the image with supplementary lighting and the image without supplementary lighting; an edge detecting step for performing an edge detection on the image without supplementary lighting to obtain an edge image; and a shadow line eliminating step for eliminating a part corresponding to the illumination area image from the edge image to obtain an actual edge image.

According to one aspect of the embodiment of the present disclosure, the image with supplementary lighting is captured by using an infrared light emitting method to provide a supplementary lighting.

According to one aspect of the embodiment of the present disclosure, in the illumination difference step, it is determined that a pixel point belongs to the illumination area image when a ratio of a pixel value of the image with supplementary lighting to a pixel value of the image without supplementary lighting is within a predetermined threshold range.

According to one aspect of the embodiment of the present disclosure, in the edge detecting step, an edge detection is performed after performing a Gaussian Blur processing on the image without supplementary lighting.

According to one aspect of the embodiment of the present disclosure, the shadow line eliminating module is configured to eliminate a pixel point of the edge image when determining that an area proportion of an illumination area in a neighborhood of the pixel point is within a predetermined area threshold range.

According to one aspect of the embodiment of the present disclosure, the shadow line eliminating step includes: a neighborhood determining step for determining a neighborhood for each pixel point in the edge image; a corresponding area determining step for determining an area corresponding to the neighborhood from the illumination area image; an illumination area proportion determining step for determining whether the area proportion of the illumination area in the area is within the predetermined area threshold range; an edge point eliminating step for eliminating one or more pixel points whose area proportions are within the predetermined area threshold range; and an actual edge image output step for generating and outputting the actual edge image based on one or more first remaining edge points.

In a fifth aspect, another embodiment of the present disclosure provides a method for identifying an empty tray, including: the method for eliminating a shadow; and an empty tray determining step for determining whether a tray is empty based on the actual edge image, the image with supplementary lighting and the image without supplementary lighting are obtained by photographing an empty tray.

According to one aspect of the embodiment of the present disclosure, the method for identifying an empty tray further includes: a template matching step for matching the actual edge image with an interference medium image template; and a corresponding area eliminating step for eliminating one or more edge points corresponding to the interference medium image template from the actual edge image to obtain one or more second remaining edge points, in the empty tray determining step, it is determined whether the tray is empty by using the one or more second remaining edge points instead of the actual edge image.

According to one aspect of the embodiment of the present disclosure, the method for identifying an empty tray further includes: an interference medium image template generating step for generating an interference medium image template containing edge points of an interference medium by performing an edge detection on a plurality of bottom pallet images.

In a sixth aspect, another embodiment of the present disclosure provides a computer-readable storage medium storing programs, wherein the programs cause the computer to perform: an image acquiring step for acquiring an image with supplementary lighting and an image without supplementary lighting; an illumination difference step for obtaining an illumination area image based on a difference between the image with supplementary lighting and the image without supplementary lighting; an edge detecting step for performing an edge detection on the image without supplementary lighting to obtain an edge image; and a shadow line eliminating step for eliminating a part corresponding to the illumination area image from the edge image to obtain an actual edge image.

In the present disclosure, the actual edge image that eliminates the edge line caused by illumination is generated by using the image with supplementary lighting and image without supplementary lighting. The actual edge image may be used in empty tray identification, thereby reducing the impact of lighting on empty tray identification.

### BRIEF DESCRIPTION OF THE DRAWINGS

In order to clearly describe technical solutions in the embodiments of the present disclosure, drawings to be used in the description of the embodiments will be briefly introduced below. Obviously, the drawings in following description are only some embodiments of the present disclosure. For those skilled in the art, other drawings may also be obtained based on the drawings without creative work.
FIG. 1 is a schematic diagram showing a composition of a system for identifying an empty tray involved in a first implementation;
FIG. 2 is a functional block diagram showing an embodiment 1 of an apparatus 30 for identifying an empty tray involved in a first implementation;
FIG. 3 is a flowchart showing an embodiment 1 of a method for identifying an empty tray involved in a first implementation;
FIG. 4 is a flowchart showing an example of a corresponding area eliminating step S34 and an empty tray determining step S35 of a method for identifying an empty tray involved in a first implementation;
FIG. 5 is a flowchart schematically showing an example of an embodiment 1 of a method for identifying an empty tray involved in a first implementation;
FIG. 6 is a flowchart showing an example of an edge detecting step S32 of a method for identifying an empty tray involved in a first implementation;
FIG. 7 is a flowchart showing an example of a template matching step S33 of a method for identifying an empty tray involved in a first implementation;
FIG. 8 is a functional block diagram showing an embodiment 2 of an apparatus 30 for identifying an empty tray involved in a first implementation;
FIG. 9 is a flowchart showing an embodiment 2 of a method for identifying an empty tray involved in a first implementation;
FIG. 10 is a flowchart showing an example of a bottom pallet outline extracting step S36 of a method for identifying an empty tray involved in a first implementation;
FIG. 11 is a flowchart showing an example of a rotation correcting step S37 of a method for identifying an empty tray involved in a first implementation;
FIG. 12 is a functional block diagram showing an embodiment 1 of an interference medium image template generating apparatus 40 involved in a second implementation;
FIG. 13 is a flowchart showing an example of an embodiment 1 of an interference medium image template generating method involved in a second implementation;
FIG. 14 is a functional block diagram showing an embodiment 2 of an interference medium image template generating apparatus 40 involved in a second implementation;
FIG. 15 is a flowchart showing an embodiment 2 of an interference medium image template generating method involved in a second implementation;
FIG. 16 is a flowchart showing an example of a final template generating step S42 of an interference medium image template generating method involved in a second implementation;
FIG. 17 (a) shows an initial template, and FIG. 17 (b) shows a final template;
FIG. 18 is a schematic diagram showing a composition of a system for identifying an empty tray involved in a second implementation;
FIG. 19 is a functional block diagram showing an example of an embodiment 3 of an interference medium image template generating apparatus 40 involved in a second implementation;
FIG. 20 is a flowchart showing an embodiment 3 of an interference medium image template generating method involved in a second implementation;
FIG. 21 is a flowchart showing an example of an running phase updating step S43 of an interference medium image template generating method involved in a second implementation;
FIG. 22 is a schematic diagram showing a composition of a system for identifying an empty tray involved in a third implementation;
FIG. 23 is a functional block diagram showing an embodiment 1 of an apparatus 70 for eliminating a shadow involved in a third implementation;
FIG. 24 is a flowchart showing an embodiment 1 of a method for eliminating a shadow involved in a third implementation;
FIGS. 25 (a) to (d) are flowcharts showing an example of an illumination difference step S72 of a method for eliminating a shadow involved in a third implementation;
FIG. 26 is a flowchart showing an example of a shadow line eliminating step S74 of a method for eliminating a shadow involved in a third implementation;
FIGS. 27 (a) and (b) are schematic diagrams showing edge images before and after a processing of a shadow line eliminating step;
FIG. 28 is a functional block diagram showing an embodiment 2 of an apparatus 30" for identifying an empty tray involved in a third implementation;
FIG. 29 is a flowchart showing an embodiment 2 of a method for identifying an empty tray involved in a third implementation;
FIG. 30 is a functional block diagram showing an embodiment 3 of a system for identifying an empty tray involved in a third implementation.

### DETAILED DESCRIPTION OF EMBODIMENTS

Exemplary implementations or embodiments of the present disclosure will be described in detail below with reference to the drawings. Although exemplary embodiments of the present disclosure are shown in the drawings, it should be understood that the present disclosure may be implemented in various forms and should not be limited to the implementations or embodiments described herein. Rather, the implementations or embodiments are provided to enable a clearer understanding of the present disclosure.

The terms "first", "second", etc. in the specification and claims of the present disclosure are used to distinguish similar objects, but are not used to describe a specific order or sequence. It is to be understood that data such used are interchangeable under appropriate circumstances, so that the implementations or embodiments of present disclosure described herein can be practiced in a sequence other than that illustrated or described. In addition, the terms "including" and "having" and any variations thereof are intended to cover non-exclusive inclusions. For example, a process, method, system, product, or device that includes a series of steps or units is not limited to those steps or units that are explicitly listed, but may include other steps or units that are not explicitly listed. The same or similar reference signs in the present disclosure represent components having the same or similar functions.

### <First implementation>

In order to solve the problem that the existing empty tray identification technology has low identification accuracy for a tray provided with an interference medium, the first implementation of the present disclosure provides an apparatus, system and method for identifying an empty tray capable of adaptive detection of the tray provided with the interference medium. Here, the "interference medium" refers to medium that may interfere with the identification of empty tray and are different from the structure of the tray itself, such as advertisements, stickers, printed paintings on the tray, etc. "Provided with interference medium" means that the interference medium may be attached to the tray through pasting, printing, etc.

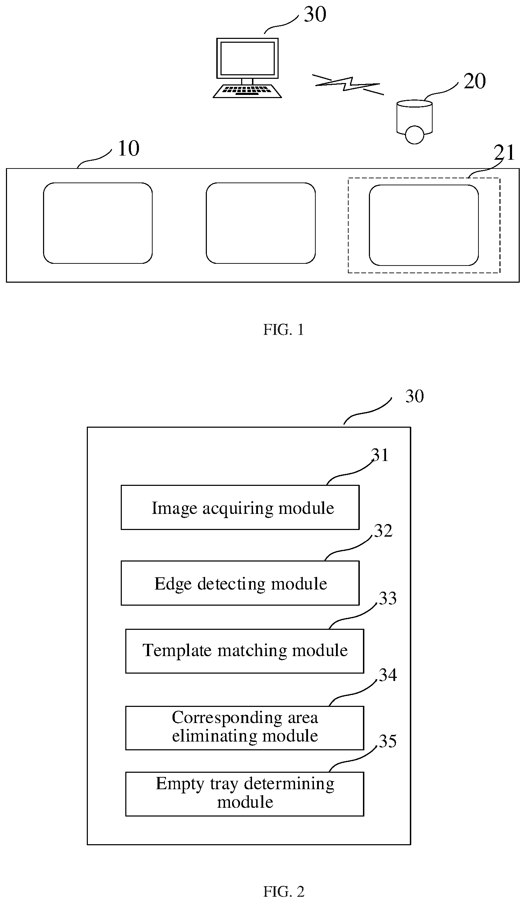

FIG. 1 is a schematic diagram showing a composition of a system for identifying an empty tray involved in this implementation. The system 100 for identifying an empty tray may be used in a luggage security inspection scene. The system 100 for identifying an empty tray may include a tray transfer apparatus 10, an image collecting apparatus 20, and an apparatus 30 for identifying an empty tray.

As shown in FIG. 1, the tray transfer apparatus 10 may be configured to transfer the tray along a first direction X (horizontal direction). Here, the tray may be used to accommodate a luggage.

The image collecting apparatus 20 collects an image of the tray passing through an image collecting area 21 via the tray transfer apparatus 10. In other words, the image of the tray passing through the image collecting area is photographed.

In an exemplary embodiment, the image collecting apparatus 20 may be a camera, more specifically, may be a camera that photographs static pictures, or may be a camera that photographs videos. In other words, the image may be either a static image or a moving image.

Although only one image collecting module is shown in FIG. 1, those skilled in the art will understand that two or more image collecting modules may be provided.

The apparatus 30 for identifying an empty tray may be implemented in hardware, or in a software module running on one or more processors, or in a combination thereof. For example, the apparatus 30 for identifying an empty tray may be implemented by a combination of software and hardware by any suitable electronic device such as a desktop computer, a tablet computer, a smart phone, a server, etc. equipped with a processor.

The processor of the apparatus 30 for identifying an empty tray may perform a method for identifying an empty tray described below.

The apparatus 30 for identifying an empty tray may further include a memory (not shown), a communication module (not shown), etc.

The memory of the apparatus 30 for identifying an empty tray may store steps for executing the method for identifying an empty tray described below, data related to empty tray identification, etc. The memory may be, for example, ROM (Read Only Memory image), RAM (Random Access Memory), etc. The memory has a storage space for program codes to perform any steps in the following method for identifying an empty tray. When the program codes are read and executed by the processor, the following method for identifying an empty tray is performed. The program codes may be read from or written into one or more computer program products. The computer program products include program code carriers such as hard disks, compact disks (CDs), memory cards or floppy disks. Such computer program products are usually portable or fixed storage units. Program code for performing any of the steps in the following method is also available for download over the Internet. The program code may, for example, be compressed in a suitable form.

The communication module in the apparatus 30 for identifying an empty tray may support establishing a direct (e.g., wired) communication channel or a wireless communication channel between the apparatus 30 for identifying an empty tray and an external electronic device, and perform communication via the established communication channel. For example, the communication module sends instructions to the image collecting apparatus 20 via the network, and receives data from the image collecting apparatus 20 via the network.

In addition, the apparatus 30 for identifying an empty tray may further include an output portion such as a displayer, a microphone, and a speaker for displaying or broadcasting the status of the tray (i.e., whether it is an empty tray or a non-empty tray), or alarming.

The apparatus 30 for identifying an empty tray of the first implementation may accurately identify an empty tray in a case that an interference medium is provided at the bottom of the tray.

In addition, although the present disclosure shows an example in which the tray transfer apparatus 10 is present, the system for identifying an empty tray of the present disclosure may not include the tray transfer apparatus 10. For example, the tray may be manually placed in the image collecting area 21 of the image collecting apparatus 20.

### (Embodiment 1)

FIG. 2 is a functional block diagram showing an embodiment 1 of an apparatus 30 for identifying an empty tray involved in the first implementation. The functional modules may be implemented by the processor of the apparatus 30 for identifying an empty tray executing the program stored in the memory of the apparatus 30 for identifying an empty tray.

As shown in FIG. 2, the apparatus 30 for identifying an empty tray includes: an image acquiring module 31 configured to acquire an image of a tray from the image collecting apparatus 20, the tray is provided with an interference medium at a bottom; an edge detecting module 32 configured to perform an edge detection on a bottom pallet area in the image, so as to obtain an edge image; a template matching module 33 configured to match the edge image with an interference medium image template; a corresponding area eliminating module 34 configured to eliminate one or more edge points corresponding to the interference medium image template from the edge image, so as to obtain one or more remaining edge points; and an empty tray determining module 35 configured to determine whether the tray is empty based on the one or more remaining edge points.

Hereinafter, the method for identifying an empty tray performed by the apparatus 30 for identifying an empty tray in the first embodiment will be described.

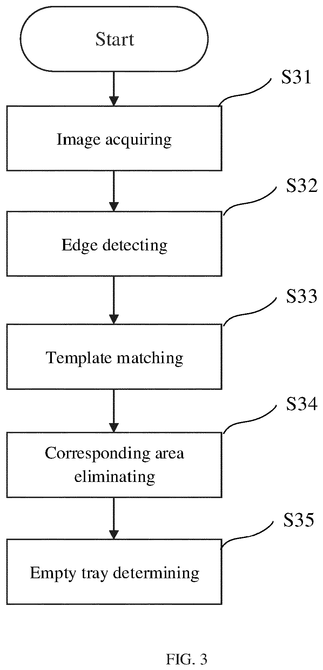

FIG. 3 is a flowchart showing an embodiment 1 of a method for identifying an empty tray involved in the first implementation.

In step S31, an image acquiring module 31 acquires an image of a tray from an image collecting apparatus 20, and the tray is provided with an interference medium at a bottom.

The image may be acquired directly from the image collecting apparatus 20, or may be acquired via other external devices communicating with the image collecting apparatus 20 and the apparatus 30 for identifying an empty tray. For example, the image collecting apparatus 20 uploads the collected image to a server, and the apparatus 30 for identifying an empty tray downloads the image from the server, etc.

In step S32, an edge detecting module 32 performs an edge detection on a bottom pallet area in the image to obtain an edge image.

The bottom pallet area may be determined from the image containing a bottom pallet by using existing technology in the field, and the edge detection may be performed on the bottom pallet area using existing edge detection technology to obtain the edge image.

In step S33, a template matching module 33 matches the edge image with an interference medium image template to find the best matching template. The best matching template is a template with the best matching degree to the edge image among all interference medium image templates.

Specifically, the edge image obtained in step S32 may be matched with one or more interference medium image templates stored in the storage portion (not shown) of the apparatus 30 for identifying an empty tray. The interference medium image template includes edge points of an interference medium image, and may further include one or more edge lines composed of some edge points.

In step S34, a corresponding area eliminating module 34 eliminates one or more edge points corresponding to the interference medium image template from the edge image to obtain one or more remaining edge points num.

In step S35, an empty tray determining module 35 determines whether the tray is an empty tray based on the one or more remaining edge points num.

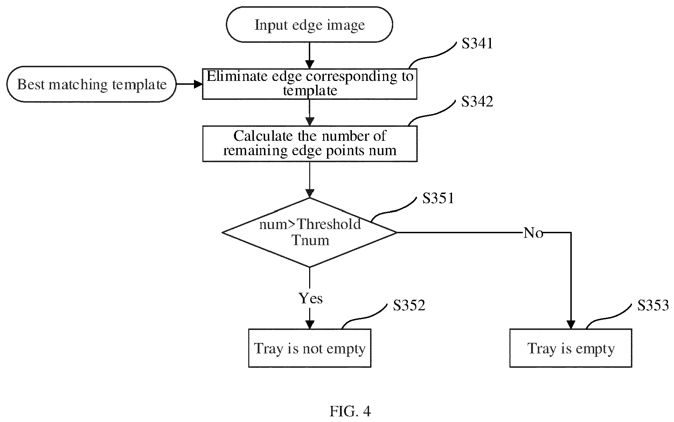

FIG. 4 shows an example of the corresponding area eliminating step S34 and the empty tray determining step S35.

In step S341, the one or more edge points corresponding to the interference medium image template are eliminated from the edge image.

As an example, assuming that a pixel point on the best matching template corresponding to each edge point (xᵢ, yᵢ) in the edge image is (Xⱼ, Yⱼ), it is searched in the best matching template whether there is a point whose pixel value indicates an edge point in a neighborhood of the pixel point (Xⱼ, Yⱼ). If the point exists, the pixel point (xᵢ, yᵢ) is set as a non-edge point. If the point does not exist, the pixel point (xᵢ, yᵢ) remains unchanged. In this way, all edge points in the edge image are traversed. In the present disclosure, the edge point is represented by white (pixel value 255). Therefore, in step S341, it is possible to search whether there is a point with pixel value 255. In addition, the neighborhood may be a square area with the pixel point as a center and a side length of 2K.

Through the processing of the step S341, the one or more edge points corresponding to the best matching template may be eliminated from the edge image.

In step S342, the number of the one or more remaining edge points in the edge image after step S341 is calculated, recorded as num.

In addition, the step S34 may further include a cropping step before step S341. In the cropping step, the edge image may be cropped to the same size as the interference medium image template. Through this processing, the influence of deviations caused by image size on the determination result may be eliminated.

In step S351, a threshold of the remaining edge points is set to Tnum, and it is determined whether the number of remaining edge points is greater than the threshold Tnum. If num> Tnum, then the process goes to step S352 and it is determined that the tray is not empty; and if num≤Tnum, then the process goes to step S353 and it is determine that the tray is empty.

In addition, a concentration degree of distribution of the remaining edge points may also be set to S, and a threshold of the concentration degree is set to Sth. If num> Tnum and S> Sth, it is determined that the tray is not empty, otherwise the tray is empty. When there are a large number of remaining edge points but the remaining edge points are not concentrated, it may not indicate that there is luggage in the tray, and the recognition result may be incorrect. By considering the concentration degree in addition to the number of remaining edge points, the non-empty tray may be more accurately identified.

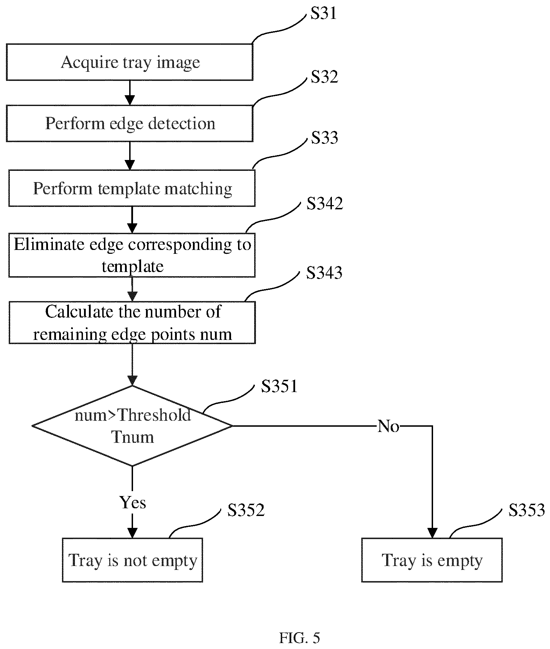

Combining the FIG. 3 and FIG. 4, FIG. 5 may be obtained. That is, FIG. 5 is a flowchart schematically showing an example of the embodiment 1.

In addition, although the above describes an example in which the edge detecting step S32 and the template matching step S33 are implemented through the existing technology, the above edge detecting step S32 and the template matching step S33 may also be implemented in the following manner.

In step S32, for the image containing the tray, the bottom pallet area of the tray is identified through the image identification. For the image of the bottom pallet area, the edge detecting module 32 selects two thresholds after performing a Gaussian Blur processing on the bottom pallet area, and obtains the edge image through dual-threshold canny edge detection.

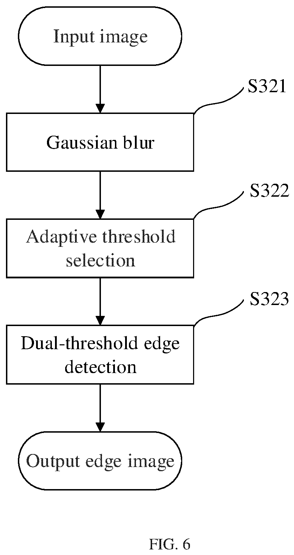

Specifically, FIG. 6 shows an example of the edge detecting step S32.

In step S321, Gaussian Blur processing is performed on an input image of the bottom pallet area.

In step S322, two thresholds T₁ and T₂ are selected.

The two thresholds may be adaptively selected by learning a live image via machine learning.

Under different environments, there will be obvious differences in brightness of images collected by the image collecting apparatus 102. By adaptively adjusting the thresholds T₁ and T₂, it is possible to reduce the situation where a non-item-edge is detected as the edge image due to weak light, etc., and the difference in the overall brightness of the image may be adapted.

In addition, by setting a reasonable threshold, the influence of image noise may be removed as much as possible while keeping the main edge unchanged.

In step S323, the two thresholds T₁ and T₂ selected in step S322 are used to perform edge detection using a double-threshold canny edge detection algorithm, so as to obtain the edge image.

Through the adaptive dual-threshold canny edge detection algorithm, the influence of non-item-edge caused by weak light and noise response may be removed as much as possible while ensuring accuracy.

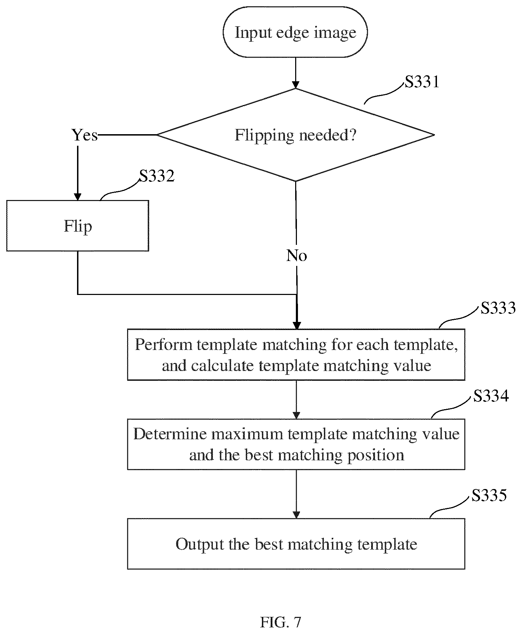

Next, an example of the template matching step S33 will be described using FIG. 7.

In step S331, it is determined whether the interference medium image template is needed to be flipped.

In step S332, the interference medium image template is flipped. The interference medium image template may be flipped 180 degrees. The angle of the tray passing through the image collecting area may be limited, or a rotation correction may be performed on the bottom pallet image or edge image at different angles. After these processes, the edge image has the same shape and angle as the interference medium image template. However, the situation of the reverse left-right or reverse upside-down may occur. By flipping the interference medium image template 180 degrees and comparing both the non-flipped interference medium image template and the flipped interference medium image template with the edge image, the best matching template may be found more effectively.

If the pasted interference medium is a centrally symmetrical figure, the flipping process is not required to be performed, that is, steps S331 to S332 are not required to be performed.

In step S333, the edge image is matched with each interference medium image template respectively, and a template matching value is calculated and stored. The template matching value represents a matching degree between the edge image and the interference medium image template, specifically the matching degree of the edge lines and edge points of the edge image and the interference medium image template.

There are two storage manners for the interference medium image template. One is to pre-store a corresponding interference medium image template in the storage portion for each interference medium; another one is to pre-store a non-flipped interference medium image template and a flipped interference medium image template in the storage portion for each interference medium.

① In a case that a corresponding interference medium image template is pre-stored in the storage portion for each interference medium, a pasting direction of the interference medium in the acquired image may be inconsistent with a direction of the interference medium in the interference medium image template.

In this situation, it may be determined whether the two directions are consistent by comparing the direction of the interference medium in the stored interference medium image template with the direction of the interference medium in the edge image. If they are not consistent, it is determined that the flipping is needed.

In this case, in the subsequent step S333, the flipped interference medium image template is matched with the edge image.

In other words, when there are N interference mediums, if N interference medium image templates are stored in the storage portion, it is determined whether the interference medium image template needs to be flipped. If the flipping is needed, the interference medium image template is flipped, and the edge image is matched with a total of N interference medium image templates without flipping or after flipping.

② In a case that the non-flipped interference medium image template and the flipped interference medium image template are pre-stored in the storage portion for each interference medium, in step S331, it is also determined that flipping is not required. That is, when there are N interference mediums and 2N interference medium image templates are stored, it is determined that the flipping is not required, and in the subsequent step S333, the edge image is matched with the stored 2N interference medium image templates.

Next, in step S334, after calculating the template matching values for all interference medium image templates, the maximum value of the template matching values and the best matching position are determined.

In step S335, the interference medium image template corresponding to the maximum template matching value is output as the best matching template.

In this embodiment, the edge detection is performed on the image of the bottom pallet area of the tray, the edge image is compared with the interference medium image template, the one or more edge points corresponding to the interference medium image template is eliminated from the edge image, and it is determined whether the tray is empty based on the one or more remaining edge points. Therefore, the influence of the edge line or edge point of the interference medium on the identification of empty tray may be eliminated. Even if the interference medium is arranged on the tray, it may also be accurately identified whether the tray is empty.

### (Embodiment 2)

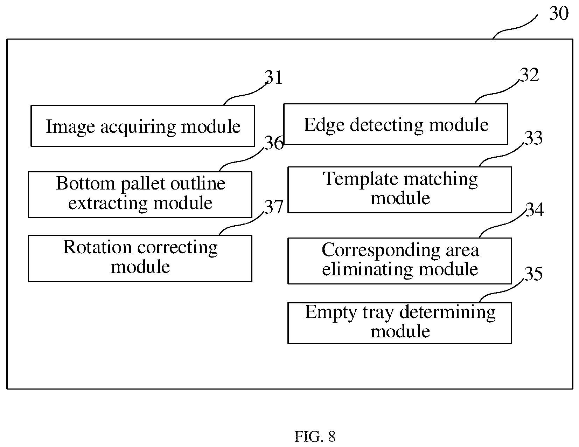

FIG. 8 is a functional block diagram schematically showing an embodiment 2 of an apparatus 30 for identifying an empty tray involved in the first implementation.

As shown in FIG. 8, the apparatus 30 for identifying an empty tray further includes: a bottom pallet outline extracting module 36 configured to extract an outline of the bottom pallet area from the image acquired by the image acquiring module 31; and a rotation correcting 37 configured to perform a rotation correction based on a minimum bounding rectangle of the outline of the bottom pallet area output by the bottom pallet outline extracting module 36, and crop an edge detection area as the bottom pallet area.

Next, the method for identifying an empty tray performed by the apparatus 30 for identifying an empty tray in the embodiment 2 will be described.

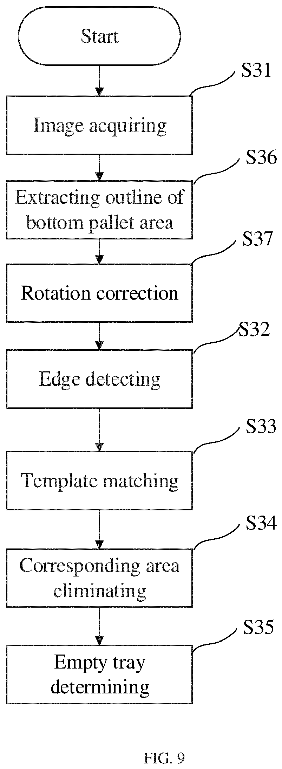

FIG. 9 is a flowchart schematically showing an embodiment 2 of the method for identifying an empty tray involved in the first implementation. Steps S31 to S35 in FIG. 9 are the same as those in embodiment 1 (FIG. 3), which will not be described in detail here. The difference between FIG. 9 and FIG. 3 is that there are steps S36 and S37 between step S31 and step S32.

Specifically, in step S36, the bottom pallet outline extracting module 36 extracts the outline of the bottom pallet area from the image acquired by the image acquiring module 31. In other words, in step S36, the position and range of the bottom pallet area of the tray are determined, and the outline of the bottom pallet area is extracted as the range of the bottom pallet area.

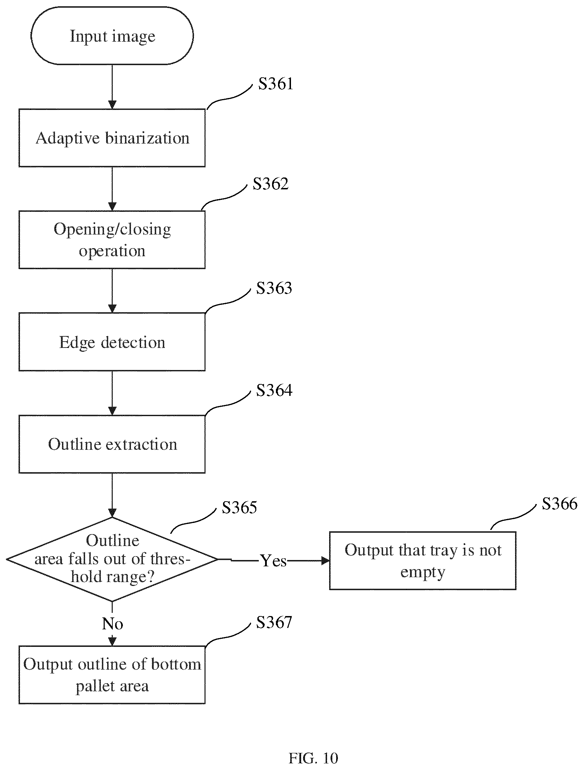

FIG. 10 shows an example of the bottom pallet outline extracting step S36.

In step S361, the bottom pallet outline extracting module 36 performs an adaptive binarization on an input image to obtain a binarized image. The adaptive binarization may use any existing algorithm. By using adaptive binarization, it is possible to adapt to environmental changes. For example, an image becomes lighter or darker depending on changes in the environment.

In step S362, an opening operation or closing operation is performed on the binary image.

In different scenes, due to factors such as lighting and differences between trays, the edge of the bottom pallet in the binary image obtained in the S361 step will be discontinuous. By selecting the size of the appropriate opening and closing kernel (operation kernel) based on the acquired image, and determining whether an opening operation or a closing operation should be performed on the binary image, the appropriate opening or closing operation is performed, which may make the contour more continuous and complete, optionally forming a closed curve.

In step S363, an edge detection algorithm is used to obtain an edge image.

The edge detection algorithm may use any existing edge detection algorithm.

In step S364, an outline extraction algorithm is used to extract an edge contour as the outline of the bottom pallet area. The outline extraction algorithm may adopt any existing outline extraction algorithm.

By adaptively binarizing the input image, performing an opening operation or closing operation, and extracting the contour from the image after these processes, a contour with better continuity and integrity may be extracted.

In addition, although not shown in the example shown in FIG. 10, the outline of the bottom pallet area extracted in step S364 may be directly output and used as input to the subsequent step S37 or step S32. However, as shown in FIG. 10, the process of step S365 may also be performed.

In step S365, the bottom pallet outline extracting module 36 determines whether the outline of the bottom pallet area extracted in step S364 falls out of a predetermined threshold range. If the outline of the bottom pallet area falls out of the predetermined threshold range, the process goes to step S366, in which it is determined that the tray is not empty and the process ends; if the outline of the bottom pallet area does not falls out of the predetermined threshold range, the process goes to step S367 to output the outline of the bottom pallet area.

The predetermined threshold range may be represented by an upper limit value and a lower limit value. Falling out of the predetermined threshold range means that the value is less than the lower limit value or greater than the upper limit value. The upper limit value may be preset according to the size of the bottom pallet of the tray. The lower limit value may be preset based on the size of the bottom pallet of the tray, the size of interference medium usually attached, and the like.

Therefore, in step S365, it is further determined whether the edge outline extracted in step S364 is a contour representing the bottom pallet area according to the predetermined threshold range. If the outline of the bottom pallet area is greater than the upper limit of the predetermined threshold range, the edge outline extracted in step S364 may not be a contour representing the bottom pallet area, but a contour with a size larger than the bottom of the tray. For example, it may indicate that there is a luggage in the tray and that the luggage is straddling the outside of the tray. If the outline of the bottom pallet area is smaller than the lower limit of the predetermined threshold range, the edge outline extracted in step S364 may not be a contour representing the bottom pallet area, but a contour with a very small size relative to the bottom pallet area. For example, the size is smaller than the size of the interference medium that is usually pasted.

By performing the processing of step S365, the accuracy of extracting the contour of the bottom pallet may be further improved.

In addition, if there is a plurality of outlines of the bottom pallet area within the predetermined threshold range, an outline of the bottom pallet area with the smallest area is selected for output. At this time, a plurality of contours related to the bottom pallet area may be detected. By selecting the contour with the smallest area among them, the interference from redundant contours on subsequent operations may be avoided, and the recognition result will be more accurate.

In addition, the upper limit value and the lower limit value may also be set to relatively close values according to the size of the bottom pallet of the tray. In this way, the contour representing the bottom pallet area may be quickly, accurately and uniquely identified.

By performing the processing of the steps S365 to S367, the non-empty tray may be quickly eliminated, and subsequent processing is performed only on the tray that cannot be quickly eliminated, thereby improving the efficiency of empty tray identification as a whole.

Returning to FIG. 9, in step 37, the rotation correcting module 37 performs a rotation correction based on a minimum bounding rectangle of the outline of the bottom pallet area output by the bottom pallet outline extracting module, and crops an edge detection area as the bottom pallet area.

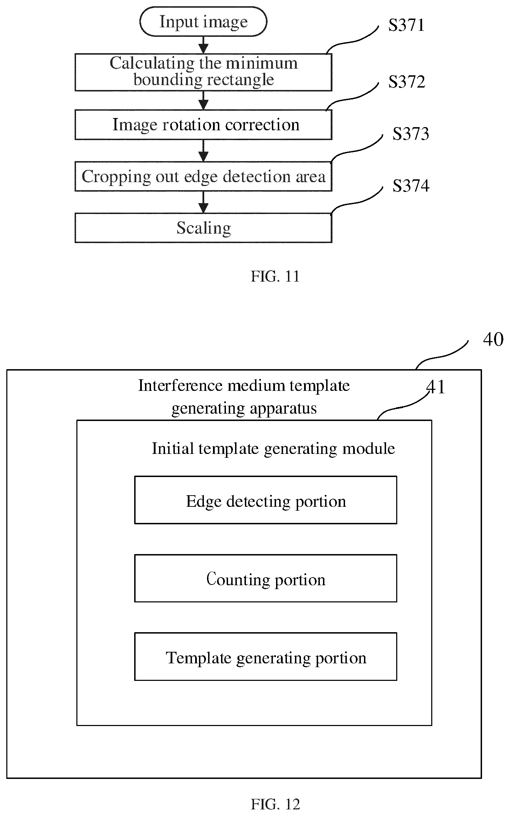

FIG. 11 shows an example of the rotation correcting step S37.

In step S371, the minimum bounding rectangle, a rotation angle θ, length and width values, and center point coordinates (x, y) are obtained for the outline of the bottom pallet area extracted in step S36.

Any existing algorithm may be used for obtaining the minimum bounding rectangle.

In step S372, affine transformation is used to rotate θ° around the center point of the minimum bounding rectangle to obtain the image of the rotated bottom area after the rotation.

In step S373, the cropping area information is calculated based on the length and width of the minimum bounding rectangle and the center point coordinates (x, y), and the edge detection area is cropped. The edge detection area indicates an area of an edge detection target. Although not shown in the figure, in step S37, the edge detection area in step S373 may be directly output as a bottom pallet image to the edge detecting module 32 to perform the edge detection processing in step S32. However, optionally, it may also perform the process of step S374 as shown in FIG. 11.

In step S374, the edge detection area is scaled to a specified size to serve as the bottom pallet area. The specified size is determined based on the size of the interference medium image template.

Due to factors such as differences between the trays themselves and changes in the surrounding environment during imaging, there will be slight differences in the size of the edge detection area cropped in step S373. Such differences may be reduced by scaling in step S374, so that the images of the bottom pallet area of the edge detection target in step S32 have higher consistency, and the impact of the size of the input image on the recognition result is reduced.

As shown in FIG. 9, in step S32, the edge detecting module 32 may perform edge detection for an object on the bottom pallet area output from the rotation correcting module 37 via step S37.

In addition, in embodiment 2, there is shown a case that both the bottom pallet outline extracting module 36 and the rotation correcting module 37 are provided and steps S36 and S37 are performed. However, in the present disclosure, the apparatus 30 for identifying an empty tray may also only include the bottom pallet outline extracting module 36 based on embodiment 1, and only perform the processing of step S36. The outline of the bottom pallet area output by the bottom pallet outline extracting module 36 is directly used as the detection object of the edge detecting module 32. In this case, for subsequent template matching, etc., it is required to impose certain restrictions on the placement direction and angle of the tray on the tray transfer apparatus 10. For example, the tray is placed on the tray transfer apparatus 10 according to the specified direction and angle.

In this embodiment, by extracting the outline of the bottom pallet and performing the rotation correction on the input image, the area requiring edge detection may be quickly and accurately determined, thereby reducing the workload of edge detection. Moreover, the orientation of the edge image may be more easily consistent with the interference medium image template, so that the template matching is more efficient and accurate, thereby effectively improving the efficiency and accuracy of empty tray identification.

### <Second implementation>

In the above first implementation, an apparatus and a method for identifying an empty tray capable of identifying interference medium are shown. In the template matching step of the first implementation, the stored interference medium image template is used to match the edge image. In order to perform such template matching, the interference medium image template is required to be pre-stored or the interference medium image template may be obtained from an external device. Therefore, as the second implementation, an interference medium image template generating apparatus and an interference medium image template generating method are provided.

However, the application scene of the second implementation is not limited to the scene of the first implementation. In a scene where interference medium on the tray needs to be identified, an interference medium image template is generally required to be pre-generated.

In the second implementation, an interference medium image template generating system for generating the interference medium image template may have a composition similar to the system for identifying an empty tray as shown in FIG. 1, and the difference is that the system includes an interference medium image template generating apparatus 40 instead of the apparatus 30 for identifying an empty tray. In other words, the interference medium image template generating system includes a tray transfer apparatus 10, an image collecting apparatus 20, and an interference medium image template generating apparatus 40.

The interference medium image template generating apparatus 40 may be implemented by a combination of software and hardware by any suitable electronic device such as a desktop computer, a tablet computer, a smart phone, a server, etc. equipped with a processor, which is in a same manner as the apparatus 30 for identifying an empty tray described in the first implementation.

The interference medium image template generating apparatus 40 may communicate with the apparatus 30 for identifying an empty tray of the first implementation, and send the generated interference medium image templates to the apparatus 30 for identifying an empty tray for use. The generated interference medium image templates may also be uploaded to a server, and the apparatus 30 for identifying an empty tray may download these interference medium image templates from the server for use.

The interference medium image template generating apparatus 40 may generate an interference medium image template by performing an edge detection on a plurality of bottom pallet images. The interference medium image template contains edge points of an interference medium and is used to identify an empty tray. The plurality of bottom pallet images is obtained by photographing a plurality of empty trays respectively. The bottom pallet of the tray is provided with an interference medium.

Hereinafter, the specific composition of the interference medium image template generating apparatus 40 and the interference medium image template generating method performed in the interference medium image template generating apparatus 40 will be described in detail.

### (Embodiment 1)

FIG. 12 is a functional block diagram schematically showing an embodiment 1 of the interference medium image template generating apparatus 40 involved in the second implementation.

As shown in FIG. 12, the interference medium image template generating apparatus 40 includes: an initial template generating module 41 configured to perform an edge detection on the plurality of bottom pallet images, count the number of edge points at a same position, and generate an initial template based on a counting result. The interference medium image template generating apparatus 40 stores and/or outputs the initial template as an interference medium image template.

Specifically, the initial template generating module 41 may include: an edge detecting portion to perform the edge detection on the plurality of bottom pallet images; a counting portion to count the number of edge points at the same position; and a template generating portion to generate the initial template based on the counting result.

Hereinafter, the interference medium image template generating method performed by the interference medium image template generating apparatus 40 in embodiment 1 will be described.

In the interference medium image template generating method of embodiment 1, the initial template generating module 41 performs the edge detection on the plurality of bottom pallet images, counts the edge points at the same position, and generates the initial template based on the counting result.

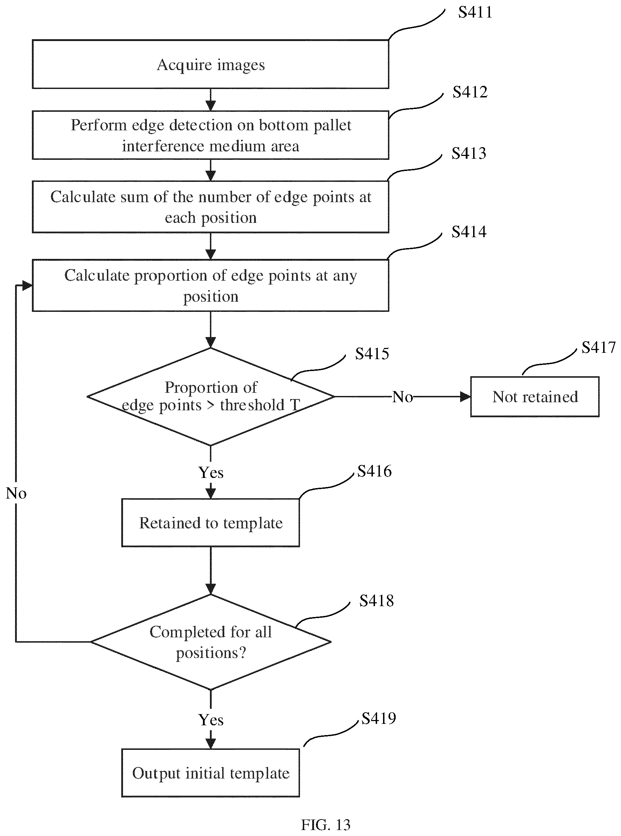

FIG. 13 shows an example of the interference medium image template generating method of embodiment 1.

In step S411, N images of empty trays are obtained from the image acquiring apparatus 20. The process of acquiring the images may be the same as step S31 of the first implementation. However, when the template is subsequently generated without flipping the images, in step S411, it is required to keep the orientation of the interference medium in the acquired images to be consistent.

A plurality of images is collected for each tray due to the differences in image quality in different postures of the tray.

In step S412, the interference medium area at the bottom of the tray is obtained through pre-processing operation, and edge detection is performed on the interference medium area at the bottom of the tray to obtain an edge image.

The pre-processing may use existing operations, for example, the bottom pallet outline extracting step S36, the rotation correcting step S37, etc. in the first implementation may be used.

Here, the edge detection may be performed in the same manner as step S32 of the first implementation.

In step S413, a two-dimensional count variable with the same size as the image and a value of zero is generated, and the two-dimensional count variable is used to count a sum of the number of edge points at each position in the N images. Specifically, if a position (x, y) of image I is an edge point, then the value v of (x, y) of the two-dimensional count variable is increased by 1, otherwise it remains unchanged. That is, the sum of the number of edge points is the count value of edge points. The two-dimensional counting variable may be a two-dimensional vector V, or a pixel value of a two-dimensional image, or a two-dimensional storage space, etc. In the case of pre-processing the image, the image size is the image of the bottom pallet area after pre-processing.

In step S414, a proportion v/N of the number of edge points at any position (x, y) in the two-dimensional count variable is calculated.

In step S415, it is determined whether the proportion v/N calculated in step S414 is greater than a threshold T. If v/N>T, the process goes to step S416 and the point is retained into the template. For example, the pixel value at the corresponding location in the template is set to 255 (white). Otherwise, the process goes to step S417 and the point is not retained into the template. For example, the pixel value at the corresponding position in the template is set to 0 (black).

In step S418, it is determined whether the processing of steps S414 to S417 is completed for all positions in the two-dimensional counting variable. If it is completed, the processing is ended and the process goes to the step S419 to output the initial template. If it is not completed, the process is returned to step S414 to continue processing the next position. In this way, the entire two-dimensional count variable is traversed to obtain the initial template.

The threshold T is a preset value for the purpose of obtaining the edge of the interference medium. The optimal value may be obtained based on multiple trials. The value of this threshold should be such that the edge line in the obtained initial template is relatively thin. The threshold T may be set appropriately according to the usage status of the tray, etc. Specifically, when the tray is relatively new and has few stains or wear, there are fewer edges other than the shape of the tray itself and the shape of the interference medium. Therefore, T may take a larger value, such as a value close to 1, which may effectively identify the edge point of the bottom pallet area. When there are many stains or wear on the tray, the stains or wear will cause more edges besides the shape of the tray itself and the shape of the interference medium. Therefore, T is should take a smaller value. In actually use, stains on the tray will gradually increase, so T usually uses a value less than 1. For trays in daily use, according to the test results, it is optional that T is 0.3 to 0.4. At this time, an edge of appropriate thickness may be obtained.

In steps S413 to S418, although it is shown that the ratio v/N of the number of edge points is compared with the threshold T to determine whether to retain the one or more edge points, the count value of the one or more edge points obtained in step S414 may also be directly compared with a threshold to determine whether to retain the one or more edge points.

As described above, by counting edge points at each position in the edge image, an initial template is generated based on the count value. In this way, it is possible to generate an initial template containing edge points that effectively represent the actual edge of the interference medium image.

Therefore, in this embodiment, by performing the edge detection on the plurality of bottom pallet images, counting the one or more edge points at the same position, and generating the initial template based on the counting result, an interference medium image template that effectively represents the distribution of one or more edge points of the interference medium image may be generated. Through such interference medium image template, the interference-medium-adaptive empty tray identification may be achieved.

### (Embodiment 2)

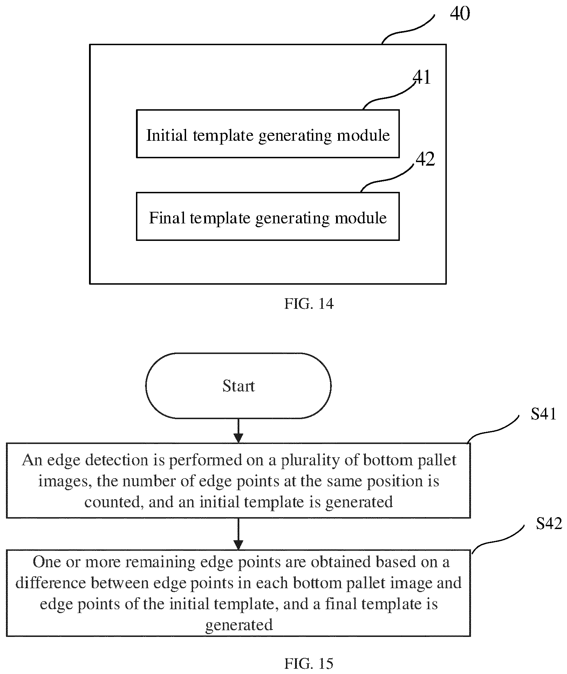

FIG. 14 is a functional block diagram schematically showing an embodiment 2 of the interference medium image template generating apparatus 40 involved in the second implementation.

As shown in FIG. 14, the interference medium image template generating apparatus 40 further includes a final template generating module 42 in addition to the initial template generating module 41. That is, the interference medium image template generating apparatus 40 includes: the initial template generating module 41 configured to perform an edge detection on the plurality of bottom pallet images, count the number of edge points at a same position, and generate an initial template based on a counting result; and the final template generating module 42 configured to obtain one or more remaining edge points according to a difference between edge points of each of the plurality of bottom pallet images and edge points of the initial template, and update the initial template according to the one or more remaining edge points to generate a final template. The interference medium image template generating apparatus 40 is configured to store and/or output the final template as the interference medium image template instead of the initial template.

Specifically, the final template generation module 42 may include: an edge image acquiring portion to acquire N edge images of a bottom area of a tray; a corresponding area eliminating portion to eliminate one or more edge points corresponding to the initial template from the edge images to obtain one or more remaining edge points; and a template updating portion to update the initial template based on the one or more remaining edge points. The edge image acquiring portion may further include an image acquiring portion to acquire N images of the tray, and an edge detecting portion to perform an edge detection on the bottom pallet area in the image to obtain the edge image.

It may be seen that the image acquiring portion, the edge detecting portion, and corresponding area eliminating portion in the final template generating module 42 are respectively similar to the image acquiring module 31, the edge detecting module 32, and the corresponding area eliminating module 34 in the apparatus 30 for identifying an empty tray in the first implementation. The difference between the two is that: firstly, the final template generating module 42 obtains a plurality of images containing a tray, and performs the edge detection, corresponding area elimination and other processing on the plurality of images respectively, while only one image to be identified for the empty tray is processed in the apparatus 30 for identifying an empty tray; secondly, the corresponding area elimination in apparatus 30 for identifying an empty tray is performed based on the best matching template after template matching, while the corresponding area elimination in the interference medium image template generating apparatus 40 is performed based on the initial template.

Hereinafter, the interference medium image template generating method performed by the interference medium image template generating apparatus 40 in embodiment 2 will be described.

FIG. 15 is a flowchart schematically showing an embodiment 2 of the interference medium image template generating method involved in the second implementation.

The processing of the initial template generation step S41 is the same as that in the embodiment 1, and therefore repeated description is omitted.

In step S42, the final template generating module 42 obtains the one or more remaining edge points based on the difference between edge points of each bottom pallet image and edge points of the initial template, and updates the initial template based on the one or more remaining edge points, thereby generating the final template.

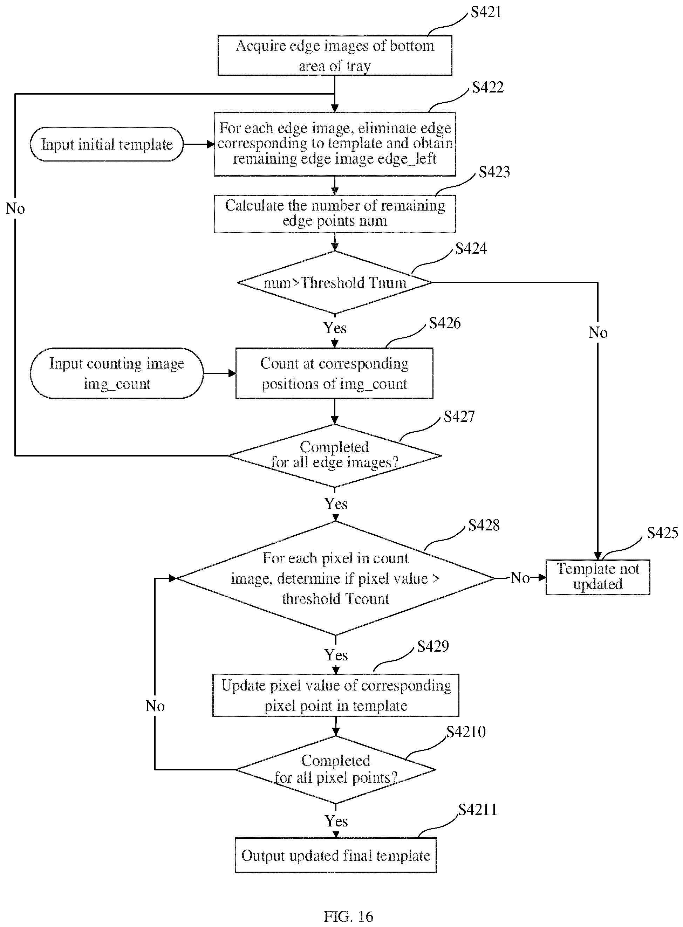

Specifically, FIG. 16 shows an example of the final template generation step S42.

In step S421, N edge images of the bottom area of the tray are obtained.

Since step S42 is performed after step S41, the edge image output from step S412 may be directly obtained. In this case, the amount of calculation may be reduced and the calculation speed may be accelerated.

In addition, N edge images of the bottom area of the tray may be obtained in the same manner as steps S411 and S412 shown in FIG. 13. N edge images of the bottom area of the tray may also be obtained in the same manner as the image acquiring step S31 and the edge detecting step S32 of FIG. 3 (or FIG. 5) of the first implementation. In this case, the edge image acquiring portion of the final template generating module 42 includes: an image acquiring portion to acquire N images of the tray; and an edge detecting portion to perform the edge detection on the bottom pallet area in the image to obtain the edge image.

Returning to FIG. 16, in step S422, for each edge image obtained in step S421, the edge corresponding to the initial template is eliminated, and the remaining edge image edge_left is obtained.

As an example, the edge point corresponding to edge point of the initial template may be found from edge points of the edge image of the bottom pallet image through a neighborhood processing.

As an example, a neighborhood Pₗ(x_{E}, y_{E}) of a pixel point P(x_{E}, y_{E}) is determined in the edge image, and an area Pₗ(x_{M}, y_{M}) corresponding to the neighborhood of the pixel point P(x_{E}, y_{E}) is determined in the initial template. If there is a point in Pₗ(x_{M}, y_{M}) whose pixel value indicates that it is an edge point (for example, a point with a pixel value of 255), the pixel point P(x_{E}, y_{E}) is set as a non-edge point, otherwise, the edge point is retained. In this way, all edge points in the plurality of edge images are traversed. In addition, the neighborhood may be a square area with the pixel point as the center and a side length of l.

The processing of step S422 has the same function as the processing of step S341 of FIG. 4 in the first implementation, both of which are to eliminate the edge point corresponding to the template from the edge image. Therefore, although the specific examples in step S422 and step S341 are different, they may be used interchangeably.

Through the operation of step S422, the problem of simply superimposing edge points on the template, which causes the edge of the template to become thicker and affects the determination, may be effectively avoided.

In step S423, the number num of edge points of the remaining edge image edge_left of the edge image is calculated. The process of step S423 is the same as the process of step S343 of FIG. 6 in the first implementation.

In step S424, it is determined whether the number of edge points num is greater than the threshold Tnum. If not, the process goes to the step S425, in which the template is not updated.

The template is not updated when the number num of edge points in the remaining edge image edge_left is less than or equal to Tnum, which may avoid updating the template when the similarity between the edge image and the initial template is high, but only updating when the difference between the edge image and the initial template is large, thereby improving the update efficiency.

When it is determined in step S424 that the number num of edge points is greater than the threshold Tnum (num> Tnum), the process goes to step S426.

In step S426, a counting image img_count with the same size as the edge image is received, and a counting is performed on the remaining edge points of the edge image at corresponding positions (corresponding pixels) in the counting image img_count. As an example, if the corresponding position is a remaining edge point, the pixel value of this pixel point is used as the count value and is added by one.

In step S427, it is determined whether the processing of steps S422 to S426 is completed for all edge images (for example, N images). If it is completed, the process goes to step S428; otherwise, it returns to step S422 and continue processing steps S422 to S426 on the next edge image.

The counting image img_count is received from the outside in step S426 when counting for the first edge image, other than this situation, starting from the second edge image, the counting is continued to be performed on the existing counting image img_count. Therefore, the pixel value of each pixel point in the counting image img_count after step S427 represents: the count value after counting each pixel point for the one or more remaining edge points of all edge images.

In step S428, for each pixel point in the count image img_count, it is determined whether the pixel value of the pixel point is greater than the threshold Tcount. That is, it is determined whether the count value at each pixel point in the counting image img_count is greater than the threshold Tcount. If the pixel value is greater than the threshold Tcount, the process goes to step S429, otherwise, the process goes to step S425. The threshold Tcount may be set according to the number of bottom pallet images, or may be set to a constant value. From the viewpoint of balancing calculation accuracy and calculation efficiency, optionally, a range of constant integer may be 3 to 4.

In step S429, if the pixel value of a certain pixel point is greater than the threshold Tcount, the corresponding pixel point in the template is updated as an edge point. For example, the pixel value of the corresponding pixel point in the template is set to 255, so that the pixel is white, indicating the edge point.

In step S4210, it is determined whether the processing of steps S428 to S429 is completed for all pixels in the counting image img_count. If it is completed, the process goes to step S4211 and the updated final template is output. Otherwise, it returns to step S428 to determine the next pixel in the count image img_count.

By using the counting image to count the pixel points that are all remaining edge points in the plurality of edge images, the corresponding pixels in the template are updated only when the count value exceeds a certain threshold, thereby avoiding the situation where the remaining edge points that occasionally appear as noise in a few edge images are updated into the template, so as to improve the accuracy of the interference medium image template and improve the efficiency of generating the interference medium image template.

When it is determined in step S424 that the number num of edge points is greater than the threshold Tnum (num> Tnum), a dilation processing may also be performed on the remaining edge image edge_left. Through the dilation process, the edge line in the remaining edge image edge_left may be made thicker. This may avoid the situation where the edge line in the remaining edge image edge_left is too thin or the edge points in the plurality of edge images may not be aligned resulting in the count values of the counting image img_count being too scattered. In other words, it may avoid the problem that a plurality of inputs may not be aligned, causing the update to fail even when a plurality of images are input, even if they are stained or scratched.

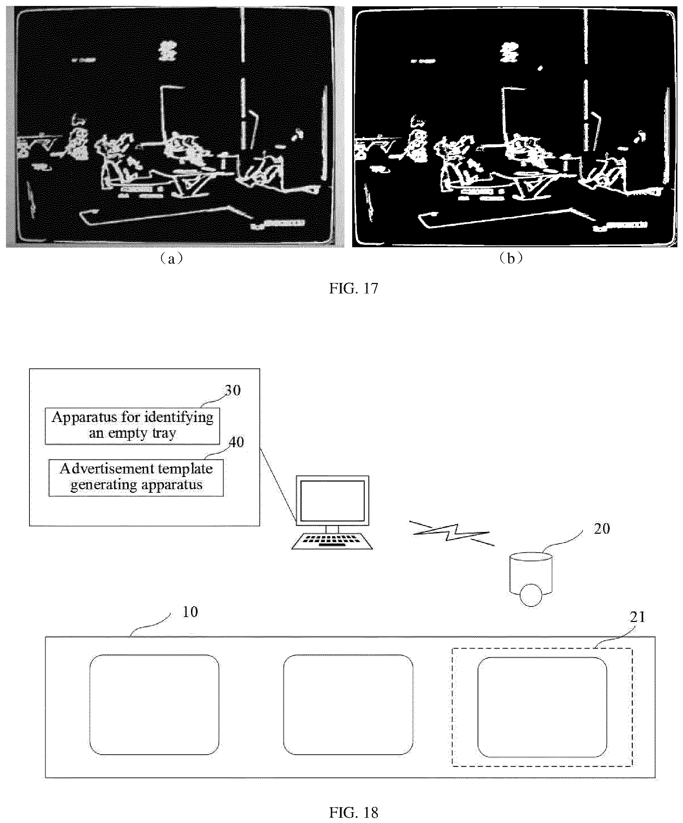

FIG. 17 shows the interference medium image template generated by the interference medium image template generating apparatus. In order to compare the effects before and after the final template generating step S42, FIG. 17 (a) shows the initial template, and FIG. 17 (b) shows the final template. It may be seen from FIG. 17 that the final template has some more edge points than the initial template, so that the edge points that are not effectively identified in the initial template may be added to the interference medium image template through the final template generation process. For example, the extra edge points in the upper right corner of FIG. 17 (b) may be caused by stains on the tray or the like.

It may be seen that in this embodiment, on the basis of generating the initial template, the final template is generated by further updating the template through the above-mentioned final template generating step, so that the previously unrecognized edge points are added to the interference medium image template, and the accuracy of the interference medium image template may be further improved.

### (Embodiment 3)

The second implementation may also be implemented in a manner of a system for identifying an empty tray. That is, the embodiment 1 and embodiment 2 of the second implementation are combined with the first implementation.

As shown in FIG. 18, the system for identifying an empty tray includes a tray transfer apparatus 10, an image collecting apparatus 20, an apparatus 30 for identifying an empty tray, and an interference medium image template generating apparatus 40. The apparatus 30 for identifying an empty tray performs template matching based on the interference medium image template generated by the interference medium image template generating apparatus 40.

Although FIG. 18 shows a case where the interference medium image template generating apparatus 40 and the apparatus 30 for identifying an empty tray are physically provided as a whole, the interference medium image template generating apparatus 40 and the apparatus 30 for identifying an empty tray may also be physically separated. For example, the apparatus 30 for identifying an empty tray may be provided in the terminal at the security inspection site, and the interference medium image template generating apparatus 40 may be provided on the server side.

The apparatus 30 for identifying an empty tray has the same configuration as the first implementation and performs the same processing, so detailed description is omitted.

In this case, in the embodiment 3, the interference medium image template generating apparatus 40, based on the embodiment 1 or embodiment 2, further includes: a running phase updating module 43.

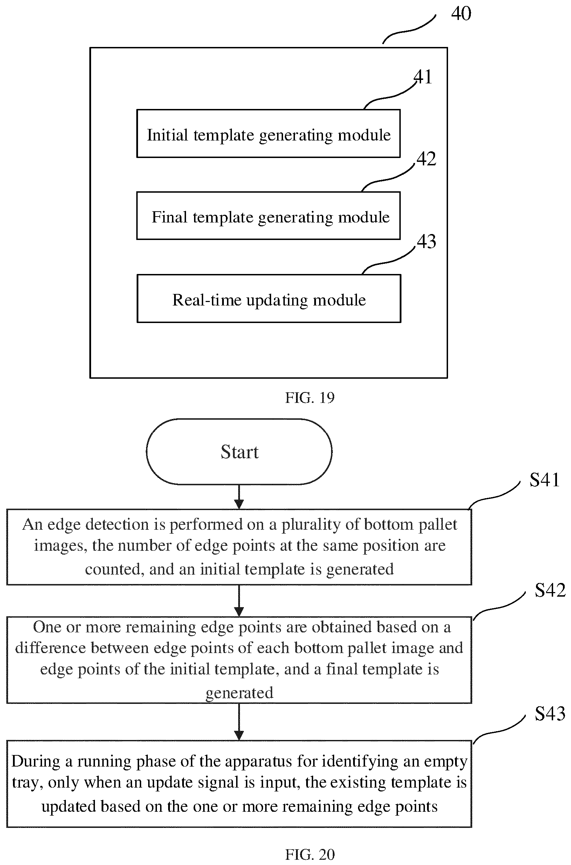

FIG. 19 is a functional block diagram schematically showing an example of embodiment 3 of the interference medium image template generating apparatus 40 involved in the second implementation. Although FIG. 19 shows the case where the initial template generating module 41, the final template generating module 42, and the runtime updating module 43 are provided at the same time, it is also possible to have only the template generating module 41 and the runtime updating module 43.

The processing performed by the runtime updating module 43 is similar to that of the final template generating module 42 in embodiment 2. The difference is that the running phase updating module 43 operates in the running phase of the apparatus for identifying an empty tray, and only when an update signal is input, the existing template is updated based on the one or more remaining edge points obtained by eliminating the one or more edge points of the existing template from the one or more edge points of the real-time tray image.

The real-time tray image is obtained by photographing the empty tray on the tray transfer apparatus 10 by the image collecting apparatus 20 during the running phase of the apparatus 30 for identifying an empty tray. The bottom pallet of the tray is provided with interference medium. The existing template is the initial template output by the above-mentioned initial template generating module 41 or the final template output by the final template generating module 42.

Specifically, both the final template generating module 42 and the runtime updating module 43 may include an image acquiring portion, an edge detecting portion, a corresponding area eliminating portion, and a template updating portion. The difference is: for the runtime updating module, firstly, the image in the image acquiring portion acquired from the image collecting apparatus is an image collected in real time during the operation stage of the apparatus 30 for identifying an empty tray; secondly, when performing corresponding area elimination, not only the initial template output by the initial template generating module 41 but also the final template output by the final template generating module 42 may be used.

That is, the running phase updating module 43 includes: an image acquiring portion to acquire a real-time tray image from the image collecting apparatus; an edge detecting portion to perform an edge detection on the bottom pallet area in the real-time tray image to obtain an edge image; a corresponding area eliminating portion to eliminate one or more edge points corresponding to the existing template from the edge image to obtain one or more remaining edge points; and a template updating portion to update the existing template according to the one or more remaining edge points. The existing template is the initial template or the final template.

In addition, the running stage updating module 43 further includes an update signal determining portion, which determines whether an update signal is received. The template updating portion of the running stage updating module 43 only updates the template when the update signal determining portion determines that the update signal is received.

In addition, the running stage updating module 43 further includes a flip determining portion, which determines whether a direction of the interference medium in the real-time tray image is consistent with a direction of the interference medium in the existing template. When they are inconsistent, it is determined that the edge image should be flipped, and after flipping, it is input to the corresponding area eliminating portion. That is, subsequent corresponding area elimination processing and template update processing are performed based on the flipped edge image.

FIG. 20 is a flowchart schematically showing an embodiment 3 of the interference medium image template generating method involved in the second implementation.

The difference between the embodiment 3 shown in FIG. 20 and the embodiment 2 shown in FIG. 15 is that the interference medium image template generating method further includes a running phase template updating step S43.

In step S43, during the running phase of the apparatus for identifying an empty tray, only when an update signal is input, the existing template is updated based on one or more remaining edge points obtained by eliminating one or more edge points corresponding to one or more edge points of the existing template from the edge point of the real-time tray image.

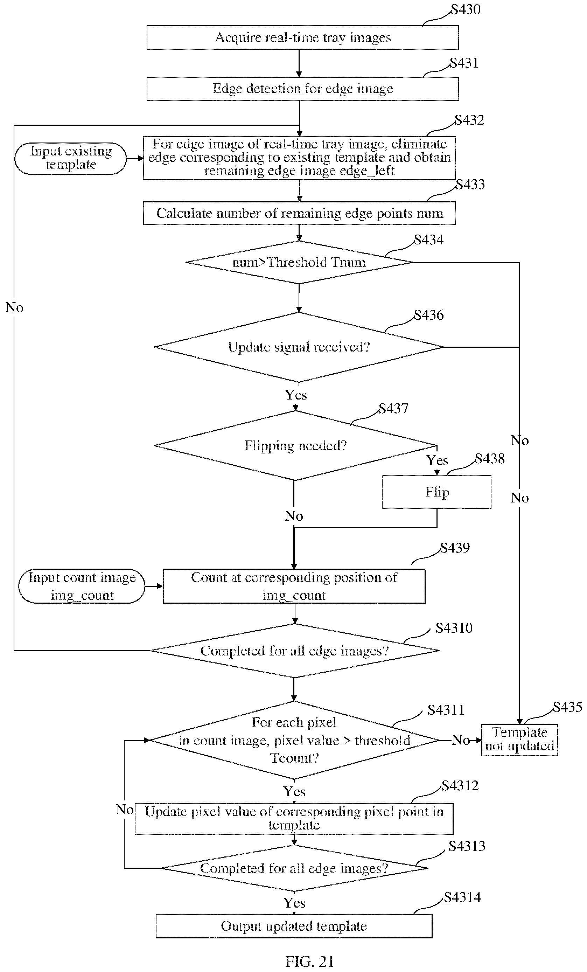

Specifically, FIG. 21 shows an example of the running phase updating step S43.

In step S430, N real-time tray images containing empty tray are obtained from the image collecting apparatus 20.

In step S431, the edge detection is performed on the interference medium area at the bottom of the tray to obtain an edge image.

The steps S430 and S431 may be the same as the steps S411 and S412 of the embodiment 1, respectively, or the steps S31 and S32 in the first implementation.

Steps S432 to S435 in FIG. 21 are the same as steps S422 to S425 in FIG. 16, respectively, so the description is omitted.

The steps S432 to S433 are also respectively the same as steps S342 to S343 in the first embodiment (refer to FIG. 4 and FIG. 5). The step S434 is also the same as the step S351 in the first embodiment (refer to FIG. 4 and FIG. 5).

That is, the steps S430 to S434 are respectively the same as the steps S31 to S351 in FIG. 5. Therefore, the running stage updating module 43 may share the image acquiring portion, edge detecting portion, and corresponding area eliminating portion with the apparatus 30 for identifying an empty tray without additionally providing above-mentioned portions. That is, the image acquiring module 31, edge detecting module 32, and corresponding area eliminating module 34 of the apparatus 30 for identifying an empty tray of the first implementation are used as the image acquiring portion, edge detecting portion, and corresponding area eliminating portion of the runtime updating module 43. Therefore, the composition of the runtime updating module 43 may be simplified, the amount of calculation may be reduced, and the calculation speed may be accelerated.

Next, in step S436, it is determined whether an update signal is received. The update signal may be input by the operator of the system for identifying an empty tray. For example, when it is found that the tray being transported by the tray transfer apparatus 10 and entering the image collecting apparatus 20 is an empty tray, an update signal is input.

In the example shown in FIG. 20, step S426 is performed after steps S430 to S434. However, step S426 may also be performed before step S430 or before step S432. However, as mentioned above, the steps S430 to S434 are respectively the same as the steps S31 to S351 in FIG. 5. Therefore, in the case that the image acquiring portion, edge detecting portion, and corresponding area eliminating portion are shared with the apparatus 30 for identifying an empty tray, it is determined whether the update signal is received after the processing of the image acquiring portion, edge detecting portion, and corresponding area eliminating portion is completed. Therefore, the template may be updated without affecting the normal operation of the apparatus 30 for identifying an empty tray.

In step S437, it is determined whether flipping is required.

Specifically, it is determined whether the direction of the interference medium in the collected real-time tray image is consistent with the direction of the interference medium in the existing template. If they are inconsistent, it is determined that the edge image needs to be flipped, and the process goes to step S438.

In step S438, the edge image is flipped. The flipped edge image is used to perform the subsequent step S439.

Steps S439 to S4314 in Fig. 21 are the same as steps S426 to S4211 in FIG. 16, respectively, so the description is omitted.

In this embodiment, since the interference medium image template may also be updated during the running phase of the system for identifying an empty tray, the interference medium image template may be updated in real time according to the strain of the interference medium on the tray, etc., which may further improve the accuracy of the interference medium image template, thereby further improving the accuracy of empty tray identification.

### <Third implementation>

In order to solve the problem that the existing empty tray identification technology has low identification accuracy for a tray with shadow caused by illumination, the third implementation of the present disclosure provides an apparatus, a system and a method for identifying an empty tray capable of adaptively detecting a tray with shadows caused by illumination.

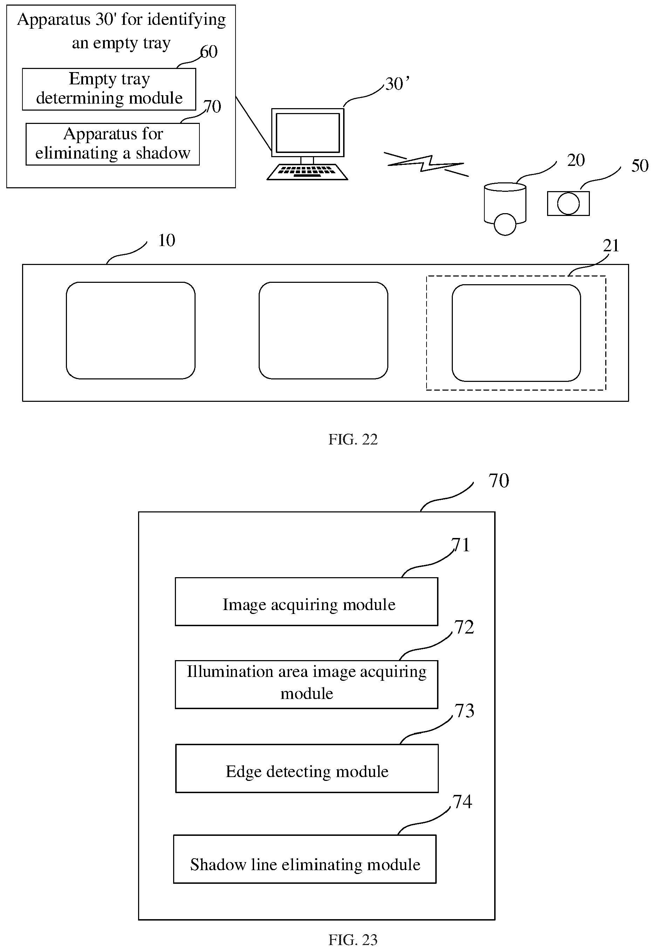

FIG. 22 is a schematic diagram showing a composition of a system for identifying an empty tray involved in this implementation. As shown in FIG. 22, the system for identifying an empty tray of this implementation may include a tray transfer apparatus 10, an image collecting apparatus 20, an apparatus 30' for identifying an empty tray, and a light emitting apparatus 50. The apparatus 30' for identifying an empty tray includes: an empty tray determining module 60 and an apparatus 70 for eliminating a shadow.

The tray transfer apparatus 10 and the image collecting apparatus 20 are the same as those in the first and second implementations, so the description is omitted.

The light emitting apparatus 50 is an apparatus capable of illuminating light to an image collecting area 21 of the image collecting apparatus 20. The light emitting apparatus 50 may function as a fill-in light for the image collecting apparatus 20. The light only needs to be able to provide supplementary lighting for the image acquisition by the image collecting apparatus, so that the image with supplementary lighting may be distinguished from the image without supplementary lighting.

Optionally, the light emitting apparatus 50 may be an infrared light emitting apparatus. When the light emitting apparatus 50 is an infrared light emitting apparatus, the changes in pixel value between the image with supplementary lighting and the image without supplementary lighting are more obvious, which is beneficial to shadow elimination.

Although the image collecting apparatus 20 and the light emitting apparatus 50 are physically separated in FIG. 22, the image collecting apparatus 20 and the light emitting apparatus 50 may also be physically integrated.

The apparatus 30' for identifying an empty tray may be implemented by a combination of software and hardware by any suitable electronic device such as a desktop computer, a tablet computer, a smart phone, a server, etc. equipped with a processor, which is in a same manner as the apparatus 30 for identifying an empty tray of the first and second implementations.

The difference between the apparatus 30' for identifying an empty tray of this implementation and the apparatus 30 for identifying an empty tray of the first and second implementations is that it includes an apparatus 70 for eliminating a shadow.

Hereinafter, the apparatus 70 for eliminating a shadow included in the apparatus 30' for identifying an empty tray will be described in detail.

### (Embodiment 1)

FIG. 23 is a functional block diagram schematically showing an embodiment 1 of an apparatus 70 for eliminating a shadow involved in a third implementation.

As shown in FIG. 23, the apparatus 70 for eliminating a shadow includes: an image acquiring module 71 configured to acquire an image with supplementary lighting and an image without supplementary lighting; an illumination area image acquiring module 72 configured to obtain an illumination area image based on a difference between the image with supplementary lighting and the image without supplementary lighting; an edge detecting module 73 configured to perform an edge detection on the image without supplementary lighting to obtain an edge image; and a shadow line eliminating module 74 configured to eliminate a part corresponding to the illumination area image from the edge image to obtain an actual edge image.

"With supplementary lighting" means that light compensation is performed. Specifically, the image without supplementary lighting refers to an image directly collected by the image collecting apparatus 20. The image with supplementary lighting refers to an image in which lighting compensation is performed on the image collection of the image collecting apparatus 20.

For example, in the system for identifying an empty tray shown in FIG. 1, the image without supplementary lighting refers to the image collected by the image collecting apparatus 20 without using the light emitting apparatus 50 to fill the image collecting area 21 of the image collecting apparatus 20 with light. The image with supplementary lighting is an image collected by the image collecting apparatus 20 in a state where the image collecting area 21 of the image collecting apparatus 20 is filled with light using the light emitting device 50.

### (Embodiment 1)

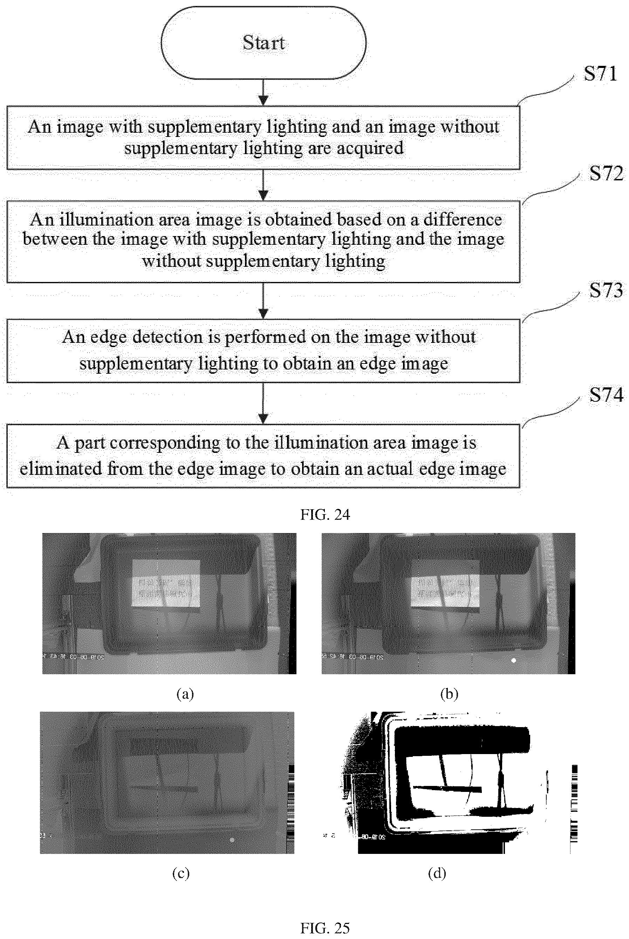

FIG. 24 is a flowchart schematically showing an embodiment 1 of a method for eliminating a shadow involved in this implementation.

In step S71, an image acquiring module 71 acquires an image with supplementary lighting and an image without supplementary lighting.

In step S72, an illumination area image acquiring module 72 obtains an illumination area image based on a difference between the image with supplementary lighting and the image without supplementary lighting.

Specifically, the illumination area image acquiring module 72 may determine that a pixel point belongs to the illumination area image when a ratio of a pixel value of the image with supplementary lighting to a pixel value of the image without supplementary lighting is within a predetermined threshold range.

The predetermined threshold range is a range near 1, for example, optionally 0.9 to 1.1. The ratio of the pixel values of the image with supplementary lighting and the image without supplementary lighting being close to 1 means that the difference between the image with supplementary lighting and the image without supplementary lighting is not obvious.

The illumination area refers to an area of the empty tray image that is illuminated by sunlight. The illumination of the sunlight is a main cause of shadow formation. Therefore, by determining the illumination area, the impact of shadow caused by illumination on empty tray identification may be effectively eliminated.

When an infrared camera is used as the light emitting apparatus 50 for filling light, the intensity of sunlight is much greater than that of the infrared fill light and ambient light. Before and after fill-in light, the difference in pixel values in the areas illuminated by sunlight is not obvious, while the difference in pixel values in areas not illuminated by sunlight is obvious. Therefore, in the present disclosure, the illumination area may be identified through changes in pixel value of the same pixel in image with supplementary lighting and image without supplementary lighting.

Hereinafter, an example of the illumination difference step S72 will be described in detail with reference to FIG. 25 (a) to FIG. 25 (d).

The image with supplementary lighting acquired in step S71 is set to L (refer to FIG. 25 (a)), and the image without supplementary lighting is set to NL (refer to FIG. 25 (b)).

In step S72, a ratio r = NL/L of pixel values of each identical pixel point in the image L with supplementary lighting and the image NL without supplementary lighting is calculated, thereby obtaining a ratio image R (refer to FIG. 25 (c)). If the ratio r of the pixel point is within the predetermined threshold range, it is determined that the pixel point is located in the illumination area, and the pixel value of the pixel point is set to 255 (white). Otherwise, it is determined that the pixel point is located in the shadow area, and the pixel value of the pixel point is set to 0 (black), thereby obtaining the illumination area image RL (refer to FIG. 25 (d)). The predetermined threshold range is also a range near 1, for example, optionally 0.9 to 1.1.

In step S73, the edge detecting module 73 performs an edge detection on the image NL without supplementary lighting and obtains its edge image NLE.

Since the edge detection in step S73 may be performed in the same manner as step S32 in the first implementation, detailed description is omitted.

In step S73, the edge detecting module 73 also performs an edge detection after performing a Gaussian Blur processing on the image without supplementary lighting, which is similarly to the first implementation.

In step S74, the shadow line eliminating module 74 eliminates a part corresponding to the illumination area image R from the edge image NLE to obtain the actual edge image.

In step S74, the shadow line eliminating module 74 may eliminate a pixel point of the edge image when determining that an area proportion of an illumination area in a neighborhood of the pixel point is within a predetermined area threshold range.

As an example, the shadow line eliminating module 74 may include: a neighborhood determining portion to determine a neighborhood for each pixel point in the edge image; a corresponding area determining portion to determine an area corresponding to the neighborhood from the illumination area image; an illumination area proportion determining portion to determine whether the area proportion of the illumination area in the area is within the predetermined area threshold range; an edge point eliminating portion to eliminate one or more pixel points whose area proportions are within the threshold range; and an actual edge image output portion to generate and output the actual edge image based on one or more remaining edge points.

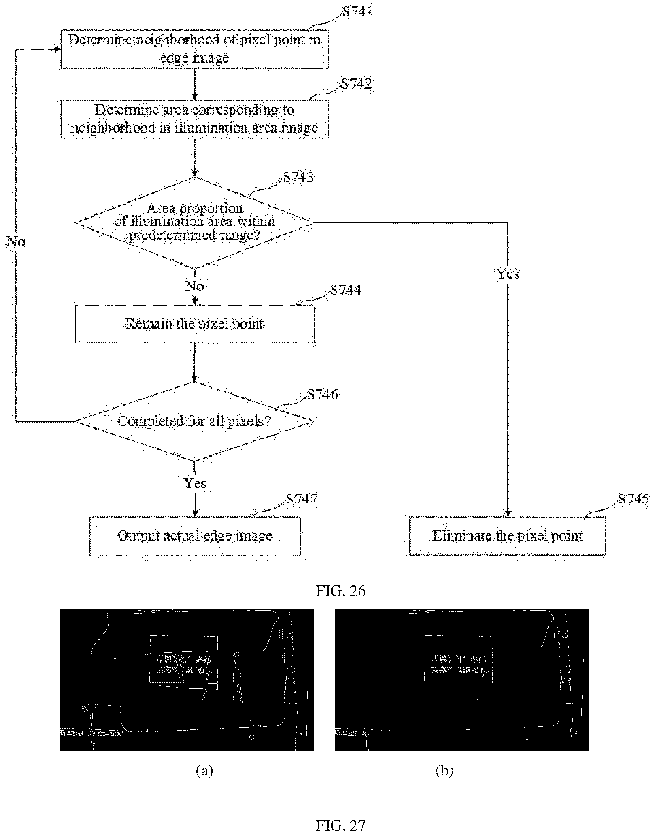

A specific example of the shadow line eliminating step S74 performed by the shadow line eliminating module 74 will be described using FIG. 26.

In step S741, the neighborhood determining portion determines the neighborhood of a pixel point in the edge image NLE.

Specifically, the pixel point of the edge image NLE is set to P(x_{NLE}, y_{NLE}), and the neighborhood Pₗ(x_{NLE}, y_{NLE}) having a rectangular area is determined with the pixel point P(x_{NLE}, y_{NLE}) as the center and l as the side length.

In step S742, the corresponding area determining portion determines an area corresponding to the neighborhood of the pixel point in the illumination area image RL.

Specifically, in the illumination area image RL , the area corresponding to the neighborhood Pₗ(x_{NLE}, y_{NLE})) is determined and expressed as Pₗ(x_{RL}, y_{RL}).

In step S743, the illumination area proportion determining portion determines whether the area proportion of the illumination area in the area Pₗ(x_{RL}, y_{RL}) is within the predetermined area threshold range. If the area proportion is within the predetermined area threshold range, the process goes to step S745; if the area proportion is not within the predetermined area threshold range, the process goes to step S744. This area proportion is a ratio of the area of the illumination area to the entire area Pₗ(x_{RL}, Y_{RL}).

The area proportion of the illumination area being within the predetermined area threshold range means that there are both illumination area and shadow area in the area Pₗ(x_{RL}, y_{RL}) in the illumination area image corresponding to the neighborhood of the pixel point. In other words, the edge in this area is a shadow edge. Therefore, the pixel point is likely to be a shadow edge rather than an edge of an object, stain, scratch, etc. Therefore, the pixel point should not be used as an edge point.

In step S744, the edge point eliminating portion determines the pixel point as an edge point and retains the edge point. That is, the pixel value of the pixel point P(x_{NLE}, y_{NLE}) is kept at its original value (for example, kept at 255).

In step S745, the edge point eliminating portion eliminates the pixel point P(x_{NLE}, y_{NLE}) from the edge image NLE. For example, the pixel value of the pixel point P(x_{NLE}, y_{NLE}) is set to 0 (black).

In step S746, it is determined whether the above-mentioned processing of steps S741 to 745 is performed on all pixel points in the edge image NLE.

In step S747, the actual edge image output portion generates and outputs the actual edge image based on one or more remaining edge points after the above operation.

FIG. 27 (a) shows the edge image NLE before the shadow line elimination process of step S74 is performed, and FIG. 27 (b) shows the actual edge image after the shadow line is eliminated from the edge image NLE by the shadow line elimination processing of step S74. According to FIG. 27 (a) and FIG. 27 (b), the shadow line caused by the shadow is effectively eliminated through the above-mentioned shadow line elimination processing.

The empty tray determining module 60 of the apparatus 30' for identifying an empty tray may determine whether a tray is empty based on the actual edge image output by the apparatus 70 for eliminating a shadow.

The empty tray determining module 60 that determines whether the tray is an empty tray based on the actual edge image may adopt any existing configuration. For example, the same configuration as the empty tray determining module 35 of the first implementation may be adopted. The empty tray determining module 35 may use each edge point of the actual edge image output by the apparatus 70 for eliminating a shadow as a remaining edge point, and use steps S351 to S353 to determine whether the tray is an empty tray, for example.

In embodiment 1, the actual edge image that eliminates the edge line caused by illumination is generated by using the image with supplementary lighting and image without supplementary lighting. The actual edge image may be used in empty tray identification, thereby reducing the impact of lighting on empty tray identification.

### (Embodiment 2)

Embodiment 1 shows an apparatus 30' for identifying an empty tray capable of performing shadow elimination and performing empty tray identification based on the remaining edge points after shadow elimination. Moreover, it is also possible to eliminate edge points caused by illumination, and then eliminate edge points corresponding to the interference medium before performing the empty tray identification. That is, embodiment 1 of the third implementation may be combined with the first implementation, and will be described here as embodiment 2.

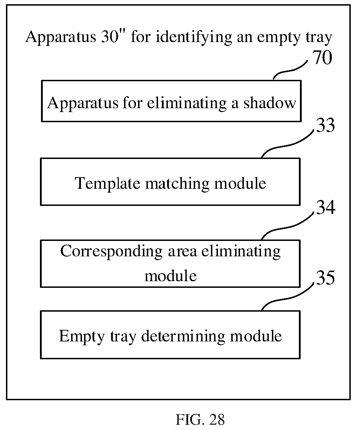

FIG. 28 is a functional block diagram schematically showing embodiment 2 of an apparatus 30" for identifying an empty tray involved in the third implementation.

As shown in FIG. 28, in addition to the apparatus 70 for eliminating a shadow of embodiment 1, the apparatus 30" for identifying an empty tray of this embodiment further includes a template matching module 33, a corresponding area eliminating module 34, and an empty tray determining module 35 which are the same as those of the first implementation.

In other words, the apparatus 30" for identifying an empty tray includes: the apparatus 70 for eliminating a shadow to eliminate one or more edge points corresponding to the shadow area from the image without supplementary lighting according to the image with supplementary lighting and the image without supplementary lighting to obtain the actual edge image; the template matching module 33 to match the actual edge image with the interference medium image template; the corresponding area eliminating module 34 to eliminate one or more edge points corresponding to the interference medium image template from the actual edge image to obtain one or more remaining edge points; and the empty tray determining module 35 to determine whether the tray is empty based on the one or more remaining edge points.

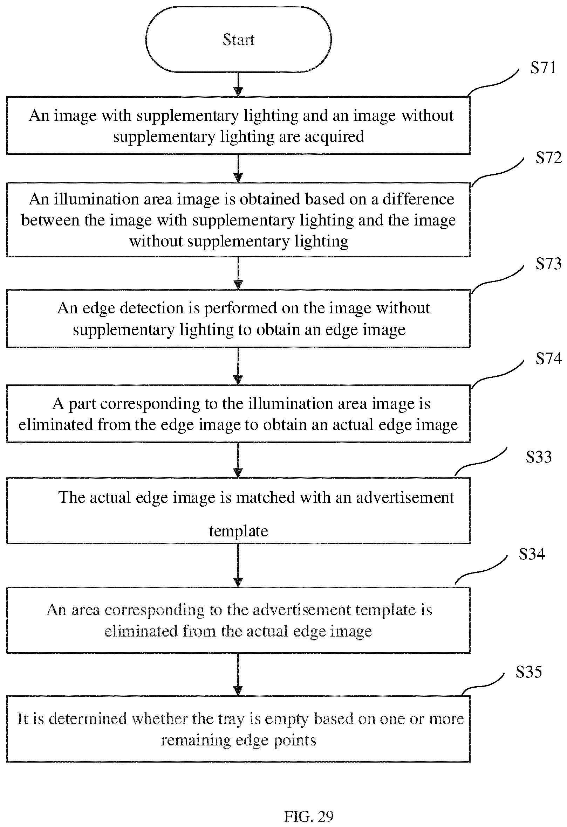

FIG. 29 is a flowchart schematically showing an embodiment 2 of a method for identifying an empty tray involved in the third implementation.

As shown in FIG. 29, the method for identifying an empty tray of this embodiment includes steps S33 to S35 that are the same as those in FIG. 3 of the first implementation, in addition to steps S71 to S74 that are the same as those in FIG. 23 of embodiment 1.

In step S33, the actual edge image output from step S74 is matched with the interference medium image template.

In step S34, one or more edge points corresponding to the interference medium image template in the actual edge image are eliminated to obtain one or more remaining edge points.

In step S35, it is determined whether the tray is empty based on the one or more remaining edge points.

Through this embodiment 2, not only the influence of illumination may be eliminated, but also the influence of interference medium may be eliminated, thereby further improving the accuracy of empty tray identification.

### (Embodiment 3)

Embodiment 2 of this implementation is a combination of embodiment 1 and the first implementation. However, this implementation may also be implemented in combination with both the first implementation and the second implementation. Therefore, as embodiment 3, a case that embodiment 1 is combined with both the first implementation and the second implementation will be described.

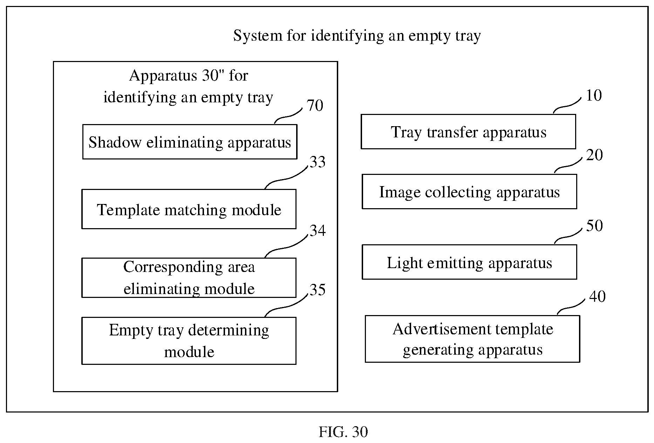

FIG. 30 is a functional block diagram schematically showing embodiment 3 of a system for identifying an empty tray involved in the third implementation.

As shown in FIG. 30, the system for identifying an empty tray of this embodiment includes: an apparatus 30" for identifying an empty tray and a light emitting apparatus 50 that are same as embodiment 2, an image collecting apparatus 20, a tray transfer apparatus 10, and an interference medium image template generating apparatus 40 that is same as the second implementation.

Since each component has been described in detail in the above embodiments and examples, the description will not be repeated.

Through this embodiment 3, the influence of illumination and interference medium is eliminated, and an interference medium image template may also be generated, thereby further improving the accuracy of empty tray identification.

Aspects of the present disclosure are described above with reference to flowchart illustrations and/or block diagrams of methods, apparatus (systems) and computer program products according to embodiments of the present disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer, special purpose computer, or other programmable data processing device to produce a machine, so that these instructions, when executed via the processor of a computer or other programmable data processing device, enable performance of the functions/acts specified in one or more blocks of the flowcharts and/or block diagrams. Such a processor may be, but is not limited to, a general-purpose processor, a special-purpose processor, a special application processor, or a field-programmable logic circuit. It will also be understood that each block in the block diagram and/or flowchart illustration, and combinations of blocks in the block diagram and/or flowchart illustration, may also be implemented by dedicated hardware that performs the specified functions or actions, or may be implemented by a combination of specialized hardware and computer instructions.

Although the implementations and specific embodiments of the present disclosure have been described above in conjunction with the accompanying drawings, those skilled in the art can make various modifications and variations and such modifications and variations are within the scope defined by the claims.

## Claims

1. An apparatus (70) for eliminating a shadow, comprising:
an image acquiring module (71) configured to acquire (S71) an image with supplementary lighting and an image without supplementary lighting;
an illumination area image acquiring module (72) configured to obtain (S72) an illumination area image based on a difference between the image with supplementary lighting and the image without supplementary lighting;
an edge detecting module (73) configured to perform (S73) an edge detection on the image without supplementary lighting to obtain an edge image; and
a shadow line eliminating module (74) configured to eliminate (S74) a part corresponding to the illumination area image from the edge image to obtain an actual edge image,
wherein the image with supplementary lighting is captured by using an infrared light emitting apparatus (50) to provide a supplementary lighting,
wherein the illumination area image acquiring module (72) is configured to determine that a pixel point belongs to the illumination area image when a ratio of a pixel value of the image with supplementary lighting to a pixel value of the image without supplementary lighting is within a predetermined threshold range.

2. The apparatus (70) according to claim 1,
wherein the edge detecting module (73) is configured to perform an edge detection after performing a Gaussian Blur processing on the image without supplementary lighting.

3. The apparatus (70) according to claim 1,
wherein the shadow line eliminating module (74) is configured to eliminate a pixel point of the edge image when determining that an area proportion of an illumination area in a neighborhood of the pixel point is within a predetermined area threshold range.

4. The apparatus (70) according to claim 3,
wherein the shadow line eliminating module (74) comprises:
a neighborhood determining portion configured to determine (S741) a neighborhood for each pixel point in the edge image;
a corresponding area determining portion configured to determine (S742) an area corresponding to the neighborhood from the illumination area image;
an illumination area proportion determining portion configured to determine (S743) whether the area proportion of the illumination area in the area is within the predetermined area threshold range;
an edge point eliminating portion configured to eliminate (S745) one or more pixel points whose area proportions are within the predetermined area threshold range; and
an actual edge image output portion configured to generate and output (S747) the actual edge image based on one or more first remaining edge points.

5. An apparatus (30', 30") for identifying an empty tray, comprising:
the apparatus (70) for eliminating a shadow according to any one of claims 1 to 4; and
an empty tray determining module (35, 60) configured to determine whether a tray is empty based on the actual edge image,
wherein the image with supplementary lighting and the image without supplementary lighting are obtained by photographing an empty tray.

6. The apparatus (30', 30") according to claim 5, further comprising:
a template matching module (33) configured to match (S33) the actual edge image with an interference medium image template; and
a corresponding area eliminating module (34) configured to eliminate (S34) one or more edge points corresponding to the interference medium image template from the actual edge image to obtain one or more second remaining edge points,
wherein the empty tray determining module (35, 60) is configured to determine (S35) whether the tray is empty by using the one or more second remaining edge points instead of the actual edge image.

7. A system for identifying an empty tray, comprising:
the apparatus (30', 30") for identifying an empty tray according to claim 5 or 6;
a light emitting apparatus (50); and
an image collecting apparatus (20) configured to photograph an empty tray when the light emitting apparatus (50) is turned off to obtain an image without supplementary lighting, and photograph an empty tray when the light emitting device (50) is turned on to obtain an image with supplementary lighting.

8. A system for identifying an empty tray, comprising:
the apparatus (30', 30") for identifying an empty tray according to claim 6;
a light emitting apparatus (50);
an image collecting apparatus (20) configured to photograph an empty tray when the light emitting apparatus (50) is turned off to obtain an image without supplementary lighting, and photograph an empty tray when the light emitting device (50) is turned on to obtain an image with supplementary lighting; and
an interference medium image template generating apparatus (40) configured to generate an interference medium image template containing edge points of an interference medium by performing an edge detection on a plurality of bottom pallet images.

9. A method for eliminating a shadow, comprising:
an image acquiring step for acquiring (S71) an image with supplementary lighting and an image without supplementary lighting;
an illumination difference step for obtaining (S72) an illumination area image based on a difference between the image with supplementary lighting and the image without supplementary lighting;
an edge detecting step for performing (S73) an edge detection on the image without supplementary lighting to obtain an edge image; and
a shadow line eliminating step for eliminating (S74) a part corresponding to the illumination area image from the edge image to obtain an actual edge image,
wherein the image with supplementary lighting is captured by using an infrared light emitting method to provide a supplementary lighting,
wherein in the illumination difference step, it is determined that a pixel point belongs to the illumination area image when a ratio of a pixel value of the image with supplementary lighting to a pixel value of the image without supplementary lighting is within a predetermined threshold range.

10. The method according to claim 9,
wherein in the edge detecting step, an edge detection is performed after performing a Gaussian Blur processing on the image without supplementary lighting,
wherein in the shadow line eliminating step, a pixel point of the edge image is eliminated when determining that an area proportion of an illumination area in a neighborhood of the pixel point is within a predetermined area threshold range,
wherein the shadow line eliminating step comprises:
a neighborhood determining step for determining (S741) a neighborhood for each pixel point in the edge image;
a corresponding area determining step for determining (S742) an area corresponding to the neighborhood from the illumination area image;
an illumination area proportion determining step for determining (S743) whether the area proportion of the illumination area in the area is within the predetermined area threshold range;
an edge point eliminating step for eliminating (S745) one or more pixel points whose area proportions are within the predetermined area threshold range; and
an actual edge image output step for generating and outputting (S747) the actual edge image based on one or more first remaining edge points.

11. A method for identifying an empty tray, comprising:
the method for eliminating a shadow according to claim 9 or 10; and
an empty tray determining step for determining whether a tray is empty based on the actual edge image,
wherein the image with supplementary lighting and the image without supplementary lighting are obtained by photographing an empty tray.

12. The method according to claim 11, further comprising:
a template matching step for matching (S33) the actual edge image with an interference medium image template; and
a corresponding area eliminating step for eliminating (S34) one or more edge points corresponding to the interference medium image template from the actual edge image to obtain one or more second remaining edge points,
wherein in the empty tray determining step, it is determined (S35) whether the tray is empty by using the one or more second remaining edge points instead of determining whether the tray is empty by using the actual edge image,
wherein the method further comprises:
an interference medium image template generating step for generating an interference medium image template containing edge points of an interference medium by performing an edge detection on a plurality of bottom pallet images.

13. A computer-readable storage medium storing programs, wherein the programs, when executed by a processor, cause the computer to perform:
an image acquiring step for acquiring (S71) an image with supplementary lighting and an image without supplementary lighting;
an illumination difference step for obtaining (S72) an illumination area image based on a difference between the image with supplementary lighting and the image without supplementary lighting;
an edge detecting step for performing (S73) an edge detection on the image without supplementary lighting to obtain an edge image; and
a shadow line eliminating step for eliminating (S74) a part corresponding to the illumination area image from the edge image to obtain an actual edge image,
wherein the image with supplementary lighting is captured by using an infrared light emitting method to provide a supplementary lighting,
wherein in the illumination difference step, it is determined that a pixel point belongs to the illumination area image when a ratio of a pixel value of the image with supplementary lighting to a pixel value of the image without supplementary lighting is within a predetermined threshold range.

## Patentansprüche

1. Vorrichtung (70) zur Entfernung von Schatten, umfassend:
ein Bilderfassungsmodul (71), das konfiguriert ist, um ein Bild mit Zusatzbeleuchtung und ein Bild ohne Zusatzbeleuchtung zu erfassen (S71);
ein Beleuchtungsbereich-Bilderfassungsmodul (72), das konfiguriert ist, um ein Beleuchtungsbereichsbild basierend auf einem Unterschied zwischen dem Bild mit Zusatzbeleuchtung und dem Bild ohne Zusatzbeleuchtung zu erlangen (S72);
ein Randerkennungsmodul (73), das konfiguriert ist, um eine Randerkennung an dem Bild ohne Zusatzbeleuchtung durchzuführen, um ein Randbild zu erlangen (S73); und
ein Schattenlinien-Entfernungsmodul (74), das konfiguriert ist, um einen Teil, der dem Beleuchtungsbereichsbild entspricht, aus dem Randbild zu entfernen (S74), um ein tatsächliches Randbild zu erlangen,
wobei das Bild mit Zusatzbeleuchtung durch Verwendung einer InfrarotLicht emittierenden Vorrichtung (50) zum Bereitstellen einer Zusatzbeleuchtung aufgenommen wird,
wobei das Beleuchtungsbereich-Bilderfassungsmodul (72) konfiguriert ist, um zu bestimmen, dass ein Pixelpunkt zu dem Beleuchtungsbereichsbild gehört, wenn ein Verhältnis eines Pixelwerts des Bilds mit Zusatzbeleuchtung zu einem Pixelwert des Bilds ohne Zusatzbeleuchtung innerhalb eines vorbestimmten Schwellenwertbereichs ist.

2. Vorrichtung (70) nach Anspruch 1,
wobei das Randerkennungsmodul (73) konfiguriert ist, um eine Randerkennung nach Durchführen einer Gaußschen Weichzeichnung auf dem Bild ohne Zusatzbeleuchtung durchzuführen.

3. Vorrichtung (70) nach Anspruch 1,
wobei das Schattenlinien-Entfernungsmodul (74) konfiguriert ist, einen Pixelpunkt des Randbilds zu entfernen, wenn bestimmt wird, dass ein Flächenanteil eines Beleuchtungsbereichs in einer Nachbarschaft des Pixelpunkts innerhalb eines vorbestimmten Flächenschwellenwertbereichs ist.

4. Vorrichtung (70) nach Anspruch 3,
wobei das Schattenlinien-Entfernungsmodul (74) Folgendes umfasst:
einen Nachbarschaftsbestimmungsabschnitt, der konfiguriert ist, um eine Nachbarschaft für jeden Pixelpunkt in dem Randbild zu bestimmen (S741);
einen entsprechenden Bereichsbestimmungsteil, der konfiguriert ist, um einen Bereich, der der Nachbarschaft entspricht, aus dem Beleuchtungsbereichsbild zu bestimmen (S742);
einen Beleuchtungsbereichsanteil-Bestimmungsteil, der konfiguriert ist, um zu bestimmen (S743), ob der Flächenanteil des Beleuchtungsbereichs in dem Bereich innerhalb des vorbestimmten Flächenschwellenwertbereichs ist;
einen Randpunkt-Entfernungsteil, der konfiguriert ist, um einen oder mehrere Pixelpunkte, deren Flächenanteile innerhalb des vorbestimmten Flächenschwellenwertbereichs sind, zu entfernen (S745); und
einen tatsächlichen Randbild-Ausgabeabschnitt, der konfiguriert ist, um das tatsächliche Randbild basierend auf einem oder mehreren ersten verbleibenden Randpunkten zu erzeugen und auszugeben (S747).

5. Vorrichtung (30', 30") zur Identifizierung einer leeren Schale, umfassend:
die Vorrichtung (70) zum Entfernen von Schatten nach einem der Ansprüche 1 bis 4; und
ein Leerschalen-Bestimmungsmodul (35, 60), das konfiguriert ist, um zu bestimmen, ob eine Schale leer ist, basierend auf dem tatsächlichen Randbild,
wobei das Bild mit Zusatzbeleuchtung und das Bild ohne Zusatzbeleuchtung durch Fotografieren einer leeren Schale erlangt werden.

6. Vorrichtung (30', 30") nach Anspruch 5, ferner umfassend:
ein Vorlagenabgleichsmodul (33), das konfiguriert ist, um das tatsächliche Randbild mit einer Interferenzmedium-Bildvorlage abzugleichen (S33); und
ein entsprechendes Bereichsentfernungsmodul (34), das konfiguriert ist, um einen oder mehrere Randpunkte, die der Interferenzmedium-Bildvorlage entsprechen, aus dem tatsächlichen Randbild zu entfernen (S34), um einen oder mehrere zweite verbleibende Randpunkte zu erlangen,
wobei das Leerschalen-Bestimmungsmodul (35, 60) konfiguriert ist, um zu bestimmen (S35), ob die Schale leer ist, indem der eine oder die mehreren zweiten verbleibenden Randpunkte anstelle des tatsächlichen Randbilds verwendet werden.

7. System zum Identifizieren einer leeren Schale, umfassend:
die Vorrichtung (30', 30") zum Identifizieren einer leeren Schale nach Anspruch 5 oder 6;
eine lichtemittierende Vorrichtung (50); und
eine Bildaufnahmevorrichtung (20), die konfiguriert ist, um eine leere Schale zu fotografieren, wenn die lichtemittierende Vorrichtung (50) ausgeschaltet ist, um ein Bild ohne Zusatzbeleuchtung zu erlangen, und eine leere Schale zu fotografieren, wenn die lichtemittierende Vorrichtung (50) eingeschaltet ist, um ein Bild mit Zusatzbeleuchtung zu erlangen.

8. System zum Identifizieren einer leeren Schale,, umfassend:
die Vorrichtung (30', 30") zum Identifizieren einer leeren Schale nach Anspruch 6;
eine lichtemittierende Vorrichtung (50);
eine Bildaufnahmevorrichtung (20), die konfiguriert ist, eine leere Schale zu fotografieren, wenn die lichtemittierende Vorrichtung (50) ausgeschaltet ist, um ein Bild ohne Zusatzbeleuchtung zu erlangen, und eine leere Schale zu fotografieren, wenn die lichtemittierende Vorrichtung (50) eingeschaltet ist, um ein Bild mit Zusatzbeleuchtung zu erlangen; und
eine Interferenzmedium-Bildvorlagenerzeugungsvorrichtung (40), die konfiguriert ist, um eine Interferenzmedium-Bildvorlage, die Randpunkte eines Interferenzmediums enthält, zu erzeugen, indem eine Randerkennung an einer Vielzahl von Bodenpalettenbildern durchgeführt wird.

9. Verfahren zum Entfernen von Schatten, umfassend:
einen Bilderfassungsschritt zum Erfassen (S71) eines Bilds mit Zusatzbeleuchtung und eines Bilds ohne Zusatzbeleuchtung;
einen Beleuchtungsdifferenzschritt zum Erlangen (S72) eines Beleuchtungsbereichsbilds basierend auf einem Unterschied zwischen dem Bild mit Zusatzbeleuchtung und dem Bild ohne Zusatzbeleuchtung;
einen Randerkennungsschritt zum Durchführen (S73) einer Randerkennung an dem Bild ohne Zusatzbeleuchtung, um ein Randbild zu erlangen; und
einen Schattenlinien-Entfernungsschritt zum Entfernen (S74) eines Teils, der dem Beleuchtungsbereichsbild entspricht, aus dem Randbild, um ein tatsächliches Randbild zu erlangen,
wobei das Bild mit Zusatzbeleuchtung durch Verwendung eines infrarotlichtemittierenden Verfahrens zum Bereitstellen einer Zusatzbeleuchtung aufgenommen wird,
wobei bei dem Beleuchtungsdifferenzschritt bestimmt wird, dass ein Pixelpunkt zu dem Beleuchtungsbereichsbild gehört, wenn ein Verhältnis eines Pixelwerts des Bildes mit Zusatzbeleuchtung zu einem Pixelwert des Bildes ohne Zusatzbeleuchtung innerhalb eines vorbestimmten Schwellenwertbereichs ist.

10. Verfahren nach Anspruch 9,
wobei bei dem Randerkennungsschritt eine Randerkennung nach Durchführung einer Gaußschen Weichzeichnung auf dem Bild ohne Zusatzbeleuchtung durchgeführt wird,
wobei bei dem Schattenlinien-Entfernungsschritt ein Pixelpunkt des Randbildes eliminiert wird, wenn festgestellt wird, dass ein Flächenanteil eines Beleuchtungsbereichs in einer Nachbarschaft des Pixelpunkts innerhalb eines vorbestimmten Flächenschwellenwertbereichs ist,
wobei der Schattenlinien-Entfernungsschritt Folgendes umfasst:
einen Nachbarschaftsbestimmungsschritt zum Bestimmen (S741) einer Nachbarschaft für jeden Pixelpunkt in dem Randbild;
einen entsprechenden Flächenbestimmungsschritt zum Bestimmen (S742) einer Fläche, die der Nachbarschaft aus dem Beleuchtungsbereichsbild entspricht;
einen Beleuchtungsflächenanteil-Bestimmungsschritt zum Bestimmen (S743), ob der Flächenanteil des Beleuchtungsbereichs in der Fläche innerhalb des vorbestimmten Flächenschwellenwertbereichs ist;
einen Randpunkt-Entfernungsschritt zum Eliminieren (S745) eines oder mehrerer Pixelpunkte, deren Flächenanteile innerhalb des vorbestimmten Flächenschwellenwertbereichs sind; und
einen tatsächlichen Randbild-Ausgabeschritt zum Erzeugen und Ausgeben (S747) des tatsächlichen Randbilds basierend auf einem oder mehreren ersten verbleibenden Randpunkten.

11. Verfahren zum Identifizieren einer leeren Schale, umfassend:
das Verfahren zum Entfernen eines Schattens nach Anspruch 9 oder 10; und
einen Schritt zum Bestimmen einer leeren Schale, bei dem bestimmt wird, ob eine Schale leer ist, basierend auf dem tatsächlichen Randbild,
wobei das Bild mit Zusatzbeleuchtung und das Bild ohne Zusatzbeleuchtung durch Fotografieren einer leeren Schale erlangt werden.

12. Verfahren nach Anspruch 11, ferner umfassend:
einen Schritt zum Vorlagenabgleich zum Abgleichen (S33) des tatsächlichen Randbilds mit einer Interferenzmedium-Bildvorlage; und
einen entsprechenden Flächenentfernungsschritt zum Eliminieren (S34) eines oder mehrerer Randpunkte, die der Interferenzmedium-Bildvorlage entsprechen, aus dem tatsächlichen Randbild, um einen oder mehrere zweite verbleibende Randpunkte zu erlangen,
wobei bei dem Schritt zum Bestimmen einer leeren Schale bestimmt wird (S35), ob die Schale leer ist, indem die einen oder mehreren zweiten verbleibenden Randpunkte verwendet werden, anstatt zu bestimmen, ob die Schale leer ist, indem das tatsächliche Randbild verwendet wird,
wobei das Verfahren ferner Folgendes umfasst:
einen Schritt zum Erzeugen einer Interferenzmedium-Bildvorlage zum Erzeugen einer Interferenzmedium-Bildvorlage, die Randpunkte eines Interferenzmediums enthält, durch Durchführung einer Randerkennung an einer Vielzahl von Bodenpalettenbildern.

13. Computerlesbares Speichermedium, das Programme speichert, wobei die Programme, wenn sie von einem Prozessor ausgeführt werden, den Computer veranlassen, Folgendes auszuführen:
einen Bilderfassungsschritt zum Erfassen (S71) eines Bilds mit Zusatzbeleuchtung und eines Bilds ohne Zusatzbeleuchtung;
einen Beleuchtungsdifferenzschritt zum Erlangen (S72) eines Beleuchtungsbereichsbildes basierend auf einem Unterschied zwischen dem Bild mit Zusatzbeleuchtung und dem Bild ohne Zusatzbeleuchtung;
einen Randerkennungsschritt zum Durchführen (S73) einer Randerkennung an dem Bild ohne Zusatzbeleuchtung, um ein Randbild zu erlangen; und
einen Schattenlinien-Entfernungsschritt zum Eliminieren (S74) eines Teils, der dem Beleuchtungsbereichsbild entspricht, aus dem Randbild, um ein tatsächliches Randbild zu erlangen,
wobei das Bild mit Zusatzbeleuchtung durch Verwendung eines infrarotlichtemittierenden Verfahrens zum Bereitstellen einer Zusatzbeleuchtung aufgenommen wird,
wobei bei dem Beleuchtungsdifferenzschritt bestimmt wird, dass ein Pixelpunkt zu dem Beleuchtungsbereichsbild gehört, wenn ein Verhältnis eines Pixelwerts des Bilds mit Zusatzbeleuchtung zu einem Pixelwert des Bilds ohne Zusatzbeleuchtung innerhalb eines vorbestimmten Schwellenwertbereichs ist.

## Revendications

1. Appareil (70) d'élimination d'ombre, comprenant :
un module d'acquisition d'image (71) configuré pour acquérir (S71) une image avec éclairage d'appoint et une image sans éclairage d'appoint ;
un module d'acquisition d'image de zone d'éclairage (72) configuré pour obtenir (S72) une image de zone d'éclairage sur la base d'une différence entre l'image avec éclairage d'appoint et l'image sans éclairage d'appoint ;
un module de détection de bord (73) configuré pour effectuer (S73) une détection de bord sur l'image sans éclairage d'appoint afin d'obtenir une image de bord ; et
un module d'élimination de ligne d'ombre (74) configuré pour éliminer (S74), de l'image de bord, une partie correspondant à l'image de zone d'éclairage afin d'obtenir une image de bord réelle,
l'image avec éclairage d'appoint étant capturée à l'aide d'un appareil d'émission de lumière infrarouge (50) pour fournir un éclairage d'appoint,
le module d'acquisition d'image de zone d'éclairage (72) étant configuré pour déterminer qu'un point de pixel appartient à l'image de zone d'éclairage lorsqu'un rapport entre une valeur de pixel de l'image avec éclairage d'appoint et une valeur de pixel de l'image sans éclairage d'appoint se situe dans une plage de seuil prédéterminée.

2. Appareil (70) selon la revendication 1,
le module de détection de bord (73) étant configuré pour effectuer une détection de bord après avoir effectué un traitement de flou gaussien sur l'image sans éclairage d'appoint.

3. Appareil (70) selon la revendication 1,
le module d'élimination de ligne d'ombre (74) étant configuré pour éliminer un point de pixel de l'image de bord lorsqu'il est déterminé qu'une proportion de zone d'une zone d'éclairage dans un voisinage du point de pixel se situe dans une plage de seuil de zone prédéterminée.

4. Appareil (70) selon la revendication 3,
le module d'élimination de ligne d'ombre (74) comprenant :
une partie de détermination de voisinage configurée pour déterminer (S741) un voisinage pour chaque point de pixel dans l'image de bord ;
une partie de détermination de zone correspondante configurée pour déterminer (S742) une zone correspondant au voisinage à partir de l'image de zone d'éclairage ;
une partie de détermination de proportion de zone d'éclairage configurée pour déterminer (S743) si la proportion de zone de la zone d'éclairage dans la zone se situe dans la plage de seuil de zone prédéterminée ;
une partie d'élimination de point de bord configurée pour éliminer (S745) un ou plusieurs points de pixel dont les proportions de zone se situent dans la plage de seuil de zone prédéterminée ; et
une partie de sortie d'image de bord réelle configurée pour générer et délivrer en sortie (S747) l'image de bord réelle sur la base d'un ou plusieurs premiers points de bord restants.

5. Appareil (30', 30") d'identification d'un plateau vide, comprenant :
l'appareil (70) d'élimination d'ombre selon l'une quelconque des revendications 1 à 4 ; et
un module de détermination de plateau vide (35, 60) configuré pour déterminer si un plateau est vide sur la base de l'image de bord réelle,
l'image avec éclairage d'appoint et l'image sans éclairage d'appoint étant obtenues en photographiant un plateau vide.

6. Appareil (30', 30") selon la revendication 5, comprenant en outre :
un module de mise en correspondance de modèle (33) configuré pour mettre en correspondance (S33) l'image de bord réelle avec un modèle d'image de milieu d'interférence ; et
un module d'élimination de zone correspondante (34) configuré pour éliminer (S34) un ou plusieurs points de bord correspondant au modèle d'image de milieu d'interférence de l'image de bord réelle afin d'obtenir un ou plusieurs deuxièmes points de bord restants,
le module de détermination de plateau vide (35, 60) étant configuré pour déterminer (S35) si le plateau est vide à l'aide du ou des deuxièmes points de bord restants à la place de l'image de bord réelle.

7. Système d'identification d'un plateau vide, comprenant :
l'appareil (30', 30") d'identification d'un plateau vide selon la revendication 5 ou 6 ;
un appareil d'émission de lumière (50) ; et
un appareil de collecte d'image (20) configuré pour photographier un plateau vide lorsque l'appareil d'émission de lumière (50) est éteint afin d'obtenir une image sans éclairage d'appoint, et photographier un plateau vide lorsque l'appareil d'émission de lumière (50) est allumé afin d'obtenir une image avec éclairage d'appoint.

8. Système d'identification d'un plateau vide, comprenant :
l'appareil (30', 30") d'identification d'un plateau vide selon la revendication 6 ;
un appareil d'émission de lumière (50) ;
un appareil de collecte d'image (20) configuré pour photographier un plateau vide lorsque l'appareil d'émission de lumière (50) est éteint afin d'obtenir une image sans éclairage d'appoint, et photographier un plateau vide lorsque l'appareil d'émission de lumière (50) est allumé afin d'obtenir une image avec éclairage d'appoint ; et
un appareil de génération de modèle d'image de milieu d'interférence (40) configuré pour générer un modèle d'image de milieu d'interférence contenant des points de bord d'un milieu d'interférence en effectuant une détection de bord sur une pluralité d'images du fond du plateau.

9. Procédé d'élimination d'ombre, comprenant :
une étape d'acquisition d'image pour acquérir (S71) une image avec éclairage d'appoint et une image sans éclairage d'appoint ;
une étape de différence d'éclairage pour obtenir (S72) une image de zone d'éclairage sur la base d'une différence entre l'image avec éclairage d'appoint et l'image sans éclairage d'appoint ;
une étape de détection de bord pour effectuer (S73) une détection de bord sur l'image sans éclairage d'appoint afin d'obtenir une image de bord ; et
une étape d'élimination de ligne d'ombre pour éliminer (S74), de l'image de bord, une partie correspondant à l'image de zone d'éclairage afin d'obtenir une image de bord réelle,
l'image avec éclairage d'appoint étant capturée à l'aide d'un procédé d'émission de lumière infrarouge pour fournir un éclairage d'appoint,
dans lequel, lors de l'étape de différence d'éclairage, il est déterminé qu'un point de pixel appartient à l'image de zone d'éclairage lorsqu'un rapport entre une valeur de pixel de l'image avec éclairage d'appoint et une valeur de pixel de l'image sans éclairage d'appoint se situe dans une plage de seuil prédéterminée.

10. Procédé selon la revendication 9,
dans lequel, lors de l'étape de détection de bord, une détection de bord est effectuée après avoir effectué un traitement de flou gaussien sur l'image sans éclairage d'appoint,
dans lequel, lors de l'étape d'élimination de ligne d'ombre, un point de pixel de l'image de bord est éliminé lorsqu'il est déterminé qu'une proportion de zone d'une zone d'éclairage dans un voisinage du point de pixel se situe dans une plage de seuil de zone prédéterminée,
l'étape d'élimination de ligne d'ombre comprenant :
une étape de détermination de voisinage pour déterminer (S741) un voisinage pour chaque point de pixel dans l'image de bord ;
une étape de détermination de zone correspondante pour déterminer (S742) une zone correspondant au voisinage à partir de l'image de zone d'éclairage ;
une étape de détermination de proportion de zone d'éclairage pour déterminer (S743) si la proportion de zone de la zone d'éclairage dans la zone se situe dans la plage de seuil de zone prédéterminée ;
une étape d'élimination de point de bord pour éliminer (S745) un ou plusieurs points de pixel dont les proportions de zone se situent dans la plage de seuil de zone prédéterminée ; et
une étape de fourniture en sortie d'image de bord réelle pour générer et fournir en sortie (S747) l'image de bord réelle sur la base d'un ou plusieurs premiers points de bord restants.

11. Procédé d'identification d'un plateau vide, comprenant :
le procédé d'élimination d'ombre selon la revendication 9 ou 10 ; et
une étape de détermination de plateau vide pour déterminer si un plateau est vide sur la base de l'image de bord réelle,
l'image avec éclairage d'appoint et l'image sans éclairage d'appoint étant obtenues en photographiant un plateau vide.

12. Procédé selon la revendication 11, comprenant en outre :
une étape de mise en correspondance de modèle pour mettre en correspondance (S33) l'image de bord réelle avec un modèle d'image de milieu d'interférence ; et
une étape d'élimination de zone correspondante pour éliminer (S34) un ou plusieurs points de bord correspondant au modèle d'image de milieu d'interférence de l'image de bord réelle afin d'obtenir un ou plusieurs deuxièmes points de bord restants,
dans lequel, lors de l'étape de détermination de plateau vide, il est déterminé (S35) si le plateau est vide à l'aide du ou des deuxièmes points de bord restants plutôt que d'utiliser l'image de bord réelle,
le procédé comprenant en outre :
une étape de génération de modèle d'image de milieu d'interférence pour générer un modèle d'image de milieu d'interférence contenant des points de bord d'un milieu d'interférence en effectuant une détection de bord sur une pluralité d'images du fond du plateau.

13. Support de stockage lisible par ordinateur stockant des programmes, lesdits programmes, lorsqu'ils sont exécutés par un processeur, amenant l'ordinateur à effectuer :
une étape d'acquisition d'image pour acquérir (S71) une image avec éclairage d'appoint et une image sans éclairage d'appoint ;
une étape de différence d'éclairage pour obtenir (S72) une image de zone d'éclairage sur la base d'une différence entre l'image avec éclairage d'appoint et l'image sans éclairage d'appoint ;
une étape de détection de bord pour effectuer (S73) une détection de bord sur l'image sans éclairage d'appoint afin d'obtenir une image de bord ; et
une étape d'élimination de ligne d'ombre pour éliminer (S74), de l'image de bord, une partie correspondant à l'image de zone d'éclairage afin d'obtenir une image de bord réelle,
l'image avec éclairage d'appoint étant capturée à l'aide d'un procédé d'émission de lumière infrarouge pour fournir un éclairage d'appoint,
dans lequel, lors de l'étape de différence d'éclairage, il est déterminé qu'un point de pixel appartient à l'image de zone d'éclairage lorsqu'un rapport entre une valeur de pixel de l'image avec éclairage d'appoint et une valeur de pixel de l'image sans éclairage d'appoint se situe dans une plage de seuil prédéterminée.
